# EUROPÄISCHE PATENTANMELDUNG

(11) **EP 4 678 961 A1**
(43) Veröffentlichungstag der Anmeldung: **14.01.2026**
(21) Anmeldenummer: 25183418.0
(22) Anmeldetag: 17.06.2025
(51) Int. Cl.: F16K 7/12, B22F 5/10, F15B 13/08, F16K 27/00, F16K 27/02

(54) **VENTILBLOCKKÖRPER UND ARMATURANORDNUNG**

(30) Priorität: 25.06.2024 DE 102024117850
(71) Anmelder: GEMÜ Gebr. Müller Apparatebau GmbH & Co. Kommanditgesellschaft, 74653 Ingelfingen (DE)
(72) Erfinder: Dasbach, Christian, 74081 Heilbronn (DE); Roos, Robin, 6343 Holzhäusern (CH); Vogt, Daniel, 74632 Neuenstein (DE)
(74) Vertreter: DREISS Patentanwälte PartG mbB

(57) **Zusammenfassung**

Es wird ein Ventilblockkörper (100) offenbart. Dieser umfasst einen monolithischen Hauptkörper (200), wobei der monolithische Hauptkörper (200) eine Mehrzahl von Basisabschnitten (202a-b) mit einem jeweiligen Ventilsitz (204a-b) umfasst, wobei die Ventilsitze (204a-b) über eine jeweilige Sitzöffnung (206a-b) des zugeordneten Basisabschnitts (202a-b) zugänglich sind, wobei der monolithische Hauptkörper (200) wenigstens eine insbesondere eben ausgeführte Anlagefläche (210) zum Anliegen des Ventilblockkörpers (100) an einem Antriebsträger (4) umfasst, wobei der monolithische Hauptkörper (200) eine Mehrzahl von Prozessfluid-Anschlüssen (220a-c) umfasst; und wobei der monolithische Hauptkörper (200) eine Mehrzahl von rohrförmigen Wandungen (230a-c) umfasst, welche jeweils einen sich ausgehend von der jeweiligen Sitzöffnung (206a-b) hin zu zumindest einem der Prozessfluid-Anschlüsse (220a-c) und/oder hin zu zumindest einer anderen der Sitzöffnungen (206a-b) erstreckenden Innenraum eines jeweiligen Prozessfluid-Kanals (240a-c) begrenzen. Eine biomimetische Struktur(400) verbindet die Basisabschnitte (202a-b; 202a-e), die Befestigungsabschnitte (260a-c; 260a-f) und die rohrförmigen Wandungen (230a-c; 230a-f) miteinander.

## Beschreibung

Die Erfindung betrifft einen Ventilblockkörper und eine Armaturanordnung umfassend den Ventilblockkörper.

Es werden Fortschritte im Bereich der Prozessventiltechnik vorgestellt, die insbesondere den Single-Use-Bereich, also die Einmalverwendung von Ventilkörpern in hochreinen Anwendungen, betreffen. Single-Use-Komponenten werden nach dem Gebrauch entsorgt.

Das der Erfindung zugrundeliegende Problem wird durch einen Ventilblockkörper gemäß dem Anspruch 1 und eine Armaturanordnung gemäß einem nebengeordneten Anspruch gelöst.

Ein erster Aspekt der Beschreibung betrifft einen Ventilblockkörper umfassend einen monolithischen Hauptkörper, wobei der monolithische Hauptkörper umfasst: eine Mehrzahl von Basisabschnitten mit einem jeweiligen Ventilsitz, wobei die Ventilsitze über eine jeweilige Sitzöffnung des zugeordneten Basisabschnitts zugänglich sind; eine Mehrzahl von Befestigungsabschnitten; eine Mehrzahl von Prozessfluid-Anschlüssen; eine Mehrzahl von rohrförmigen Wandungen, welche jeweils einen sich ausgehend von der jeweiligen Sitzöffnung hin zu zumindest einem der Prozessfluid-Anschlüsse und/oder hin zu zumindest einer anderen der Sitzöffnungen erstreckenden Innenraum eines jeweiligen Prozessfluid-Kanals begrenzen; und eine biomimetische Struktur, welche die Basisabschnitte, die Befestigungsabschnitte und die rohrförmigen Wandungen miteinander verbindet.

Durch die biomimetische, also biologische Strukturen imitierende oder nachahmende Gitter- oder Armstruktur wird beispielsweise im Vergleich zu Vollmaterial-Ventilblöcken Material eingespart, wodurch sich nicht nur Kostenvorteile ergeben, sondern insbesondere im Single-Use-Bereich sich die Umweltbilanz verbessert. Die von natürlichen Strukturen inspirierte Gitter- oder Armstruktur ermöglicht eine optimale Kombination aus struktureller Stabilität und Materialeinsparung. Die miteinander verbundenen Komponenten bilden einen funktionalen, monolithischen Hauptkörper, der durch additive Fertigungsverfahren hergestellt werden kann.

In einem vorteilhaften Beispiel weist die biomimetische Struktur eine variable Dichte auf, wobei die Dichte der biomimetischen Struktur definiert ist als Verhältnis von Strukturmaterial zu Hohlraum pro Volumeneinheit und an die lokalen mechanischen Anforderungen angepasst ist, wobei die biomimetische Struktur Bereiche mit erhöhter Dichte nahe den Ventilsitzen, den Prozessfluid-Anschlüssen und/oder den Befestigungsabschnitten aufweist und Bereiche mit verringerter Dichte zwischen den Ventilsitzen, und/oder zwischen den Prozessfluid-Anschlüssen und/oder zwischen den Befestigungsabschnitten aufweist.

Vorteilhaft ermöglicht die variable Dichte der Struktur eine optimale Verteilung des Materials entsprechend der lokalen Belastungen. In Bereichen mit höherer mechanischer Beanspruchung wird mehr Material eingesetzt, während in weniger belasteten Bereichen Material eingespart wird. Die bionische Optimierung des Ventilkörpers ermöglicht im Vergleich zum Stand der Technik, beispielsweise einem Fräsklotz, Gewichtseinsparungen im Bereich zwischen 20 % und 90 %. Dadurch wird ein verbessertes Verhältnis von Festigkeit zu Gewicht erreicht und der Materialeinsatz im Single-Use-Bereich minimiert, was die Umweltbilanz weiter verbessert.

In einem weiteren vorteilhaften Beispiel umfasst der monolithische Hauptkörper eine hierarchische Stützstruktur, insbesondere in Form der biomimetischen Struktur, bei der sich Hauptstützelemente in kleinere Stützstrukturen verzweigen, wobei die Stützstrukturen ein biomimetisches Verzweigungsmuster aufweisen, das einer natürlichen Baumaststruktur nachempfunden ist.

Diese hierarchische Stützstruktur, die von natürlichen Baumaststrukturen inspiriert ist, ermöglicht eine effiziente Kraftübertragung und Lastverteilung innerhalb des Ventilblockkörpers. Die Verzweigungen der Stützstruktur folgen biomimetischen Prinzipien und sorgen für eine optimale Stabilität bei minimalem Materialeinsatz. Durch die Nachahmung natürlicher Strukturen werden lokale Spannungsspitzen vermieden und die mechanische Belastbarkeit des Ventilblockkörpers erhöht.

In einem weiteren vorteilhaften Beispiel bildet die biomimetische Struktur ein dreidimensionales Netzwerk aus miteinander verbundenen Strukturelementen, welches die rohrförmigen Wandungen in verschiedenen Raumrichtungen stabilisiert, wobei die biomimetische Struktur eine Orientierung der Strukturelemente entlang der Hauptkraftflüsse im Betrieb aufweist.

Durch die dreidimensionale Anordnung der Strukturelemente entlang der Hauptkraftflüsse wird eine optimale mechanische Stabilität erreicht. Die Orientierung der Strukturelemente folgt den im Betrieb auftretenden Belastungen und sorgt für eine effiziente Kraftübertragung durch den gesamten Ventilblockkörper. Diese lastpfadoptimierte Anordnung der Strukturelemente führt zu einer höheren Steifigkeit und Festigkeit bei gleichzeitig reduziertem Materialeinsatz.

In einem besonders vorteilhaften Beispiel sind wenigstens zwei benachbarte rohrförmige Wandungen zumindest abschnittsweise durch einen durchgehenden Hohlraum voneinander beabstandet, sodass sich zwischen den rohrförmigen Wandungen eine skelettartige Struktur der biomimetischen Struktur ergibt.

Diese skelettartige Anordnung führt zu einer signifikanten Materialeinsparung bei gleichzeitiger Sicherstellung der mechanischen Stabilität. Der durchgehende Hohlraum zwischen benachbarten rohrförmigen Wandungen reduziert das Gesamtgewicht des Ventilblockkörpers und verbessert die Materialeffizienz. Die skelettartige Struktur der Struktur wirkt dabei wie ein leichtes, aber hochfestes Tragelement.

In einem weiteren vorteilhaften Beispiel umfasst die biomimetische Struktur Rohr-Stützabschnitte, die als Teil der biomimetischen Struktur ausgebildet sind und die rohrförmigen Wandungen mit den Befestigungsabschnitten verbinden.

Durch die Integration der Rohr-Stützabschnitte in die biomimetische Struktur wird eine direkte Kraftübertragung zwischen den rohrförmigen Wandungen und den Befestigungsabschnitten ermöglicht. Diese strukturelle Verbindung erhöht die Stabilität des Ventilblockkörpers und verhindert unerwünschte Verformungen der rohrförmigen Wandungen während des Betriebs. Die Rohr-Stützabschnitte bilden dabei einen integralen Bestandteil der Struktur und tragen zur Gesamtstabilität bei.

In einem weiteren vorteilhaften Beispiel umfasst die biomimetische Struktur Spannkraftübertragungsabschnitte, die als Teil der biomimetischen Struktur ausgebildet sind und die Befestigungsabschnitte mit den Basisabschnitten verbinden, um eine Befestigungskraftübertragung, insbesondere eine Spannkraftübertragung, zu ermöglichen.

Vorteilhaft wird durch die Spannkraftübertragungsabschnitte eine gleichmäßige Verteilung der beim Befestigen des Ventilblockkörpers auftretenden Kräfte gewährleistet. Die in die Befestigungsabschnitte eingeleiteten Spannkräfte werden effizient auf die Basisabschnitte übertragen, was zu einer stabilen und sicheren Befestigung des Ventilblockkörpers führt. Die Integration der Spannkraftübertragungsabschnitte in die biomimetische Struktur sorgt für ein harmonisches Zusammenspiel aller Komponenten und verbessert die Zuverlässigkeit der Befestigung.

In einem weiteren vorteilhaften Beispiel umfasst der Ventilblockkörper eine Mehrzahl von Ventilmembranen, welche eine jeweilige der Sitzöffnungen des monolithischen Hauptkörpers verschließen.

Die Ventilmembranen ermöglichen eine zuverlässige Steuerung des Fluidflusses durch den Ventilblockkörper. Durch den Verschluss der Sitzöffnungen wird eine präzise Regulierung des Prozessfluids erreicht. Die Ventilmembranen sind so konzipiert, dass sie optimal mit der biomimetischen Struktur des Ventilblockkörpers zusammenwirken und eine effiziente Funktion der Ventile gewährleisten.

In einem weiteren vorteilhaften Beispiel werden die Rohr-Stützabschnitte und Spannkraftübertragungsabschnitte durch ein Netzwerk aus Stegen und Knoten mit variabler Dichte gebildet, wobei die Dichte als Verhältnis von Strukturmaterial zu Hohlraum pro Volumeneinheit und/oder als Anzahl der Stege pro Volumeneinheit definiert ist, wobei die Dichte des Netzwerks im Bereich der Anschlüsse an die Befestigungsabschnitte und im Bereich der Anschlüsse an die Basisabschnitte höher ist als im mittleren Bereich der Rohr-Stützabschnitte und Spannkraftübertragungsabschnitte.

Durch die höhere Dichte in den Anschlussbereichen wird eine robuste Verbindung zwischen den verschiedenen Komponenten des Ventilblockkörpers sichergestellt. Diese Verdichtung in mechanisch höher belasteten Bereichen optimiert die Kraftübertragung und verhindert lokale Schwachstellen. Gleichzeitig wird durch die geringere Dichte im mittleren Bereich der Stützabschnitte Material eingespart, ohne die strukturelle Integrität zu beeinträchtigen. Die variable Dichte ist somit ein zentrales Element der biomimetischen Optimierung.

In einem weiteren vorteilhaften Beispiel erstreckt sich eine durchgängige oder abschnittsweise durchgängige plattenförmige Kontur zwischen den rohrförmigen Wandungen, wobei sich die plattenförmige Kontur zwischen den Prozessfluid-Anschlüssen und den Basisabschnitten befindet, wobei die plattenförmige Kontur Teil der biomimetischen Struktur ist oder sich die biomimetische Struktur an die plattenförmige Kontur anschließt.

Die plattenförmige Kontur bietet zusätzliche strukturelle Stabilität und verbessert die mechanische Integrität des Ventilblockkörpers. Durch ihre Integration in oder Verbindung mit der biomimetischen Struktur entsteht ein kohärentes Struktursystem, das die Lastübertragung zwischen den verschiedenen Elementen des Ventilblockkörpers optimiert. Die plattenförmige Kontur kann dabei zusätzlich zur reinen Stützfunktion auch zur Unterteilung von Funktionsbereichen im Ventilblockkörper dienen.

In einem weiteren vorteilhaften Beispiel sind die Befestigungsabschnitte in einem Raum zwischen den Prozessfluid-Anschlüssen und den Basisabschnitten angeordnet.

Diese räumliche Anordnung der Befestigungsabschnitte ermöglicht eine optimale Krafteinleitung und -verteilung im Ventilblockkörper. Die Position zwischen den Prozessfluid-Anschlüssen und den Basisabschnitten sorgt für einen kurzen und direkten Kraftfluss zwischen den Befestigungspunkten und den funktionellen Elementen des Ventilblockkörpers. Dadurch wird eine hohe Stabilität und Zuverlässigkeit der Befestigung erreicht, was besonders für die präzise Funktion der Ventile wichtig ist.

In einem weiteren vorteilhaften Beispiel ist ein erstes Verhältnis des Materials zu einem Hohlraum pro Volumeneinheit eines ersten Volumens, begrenzt durch eine Außenhülle der Basisabschnitte und der Befestigungsabschnitte, um wenigstens 10%, insbesondere um wenigstens 20%, größer ist als ein zweites Verhältnis des Materials zu einem Hohlraum pro Volumeneinheit eines zweiten Volumens, welches entweder durch die Prozessfluid-Anschlüsse und die Außengrenze der Befestigungsabschnitte begrenzt wird oder durch die plattenförmige Kontur und die Außengrenze der Befestigungsabschnitte begrenzt wird.

Durch dieses definierte Verhältnis wird eine optimale Materialverteilung im Ventilblockkörper erreicht. Die höhere Materialdichte im Bereich der Basisabschnitte und Befestigungsabschnitte sorgt für die notwendige Stabilität in diesen mechanisch stark beanspruchten Bereichen. Gleichzeitig wird in den weniger belasteten Bereichen Material eingespart, was zu einer Gewichtsreduktion und Verbesserung der Umweltbilanz führt. Diese präzise Abstimmung der Materialverteilung ist ein Schlüsselelement des biomimetischen Designansatzes.

In einem weiteren vorteilhaften Beispiel umfasst der Basiskörper wenigstens eine Anlagefläche zum Anliegen des Ventilblockkörpers an einem Antriebsträger und die Mehrzahl von Befestigungsabschnitten, welche eine jeweilige von der wenigstens einen Anlagefläche abgewandte Verspannfläche zum Angreifen einer Verspannvorrichtung des Antriebsträgers umfassen, wobei der jeweilige Basisabschnitt die wenigstens eine Anlagefläche zum Anliegen an dem Antriebsträger bereitstellt.

Diese Konfiguration ermöglicht eine stabile und präzise Befestigung des Ventilblockkörpers am Antriebsträger. Die Anlagefläche sorgt für eine definierte Positionierung, während die Verspannflächen der Befestigungsabschnitte eine sichere Fixierung durch die Verspannvorrichtung gewährleisten. Durch die direkte Bereitstellung der Anlagefläche durch die Basisabschnitte wird eine direkte Kraftübertragung zwischen Antriebsträger und den funktionellen Ventilelementen erreicht, was die Präzision der Ventilsteuerung verbessert.

In einem weiteren vorteilhaften Beispiel verbindet wenigstens ein Spannkraftübertragungsabschnitt des monolithischen Hauptkörpers einen der Befestigungsabschnitte und einen zu dem einen Befestigungsabschnitt benachbarten der Basisabschnitte miteinander, wobei der jeweilige Basisabschnitt die wenigstens eine Anlagefläche zum Anliegen an dem Antriebsträger bereitstellt.

Vorteilhaft wird durch diese Anordnung eine direkte und effiziente Übertragung der Spannkräfte vom Befestigungsabschnitt zum Basisabschnitt ermöglicht. Die so eingeleiteten Kräfte drücken den Basisabschnitt mit seiner Anlagefläche gleichmäßig gegen den Antriebsträger, was zu einer stabilen und zuverlässigen Verbindung führt. Diese direkte Kraftübertragung minimiert Verformungen und verbessert die Präzision der Ventilsteuerung.

In einem weiteren vorteilhaften Beispiel befindet sich wenigstens einer der Befestigungsabschnitte zwischen einem ersten und zweiten der Basisabschnitte, wobei wenigstens ein erster der Spannkraftübertragungsabschnitte den wenigstens einen Befestigungsabschnitt und den ersten Basisabschnitt miteinander verbindet, und wobei wenigstens ein zweiter der Spannkraftübertragungsabschnitte den wenigstens einen Befestigungsabschnitt und den zweiten Basisabschnitt miteinander verbindet.

Diese Konfiguration ermöglicht eine gleichmäßige Verteilung der Spannkräfte auf mehrere Basisabschnitte. Durch die zentrale Position des Befestigungsabschnitts zwischen zwei Basisabschnitten und die Verbindung durch separate Spannkraftübertragungsabschnitte wird eine ausgewogene Krafteinleitung erreicht. Dies führt zu einer verbesserten Stabilität und verhindert ungleichmäßige Belastungen, die zu Verformungen oder Funktionsbeeinträchtigungen führen könnten.

In einem weiteren vorteilhaften Beispiel umfasst ein jeweiliger der Basisabschnitte des monolithischen Hauptkörpers den Ventilsitz; die Sitzöffnung, durch die der Ventilsitz zugänglich ist; eine die Sitzöffnung umgebende Membranausnehmung zur Aufnahme eines lateralen Abschnitts der zugeordneten Ventilmembran; und wenigstens einen Abschnitt der Anlagefläche, welcher die jeweilige Membranausnehmung zumindest abschnittsweise umgibt.

Diese integrierte Gestaltung des Basisabschnitts kombiniert alle funktionalen Elemente eines Ventils in einer kompakten Einheit. Die unmittelbare Nähe von Ventilsitz, Sitzöffnung, Membranausnehmung und Anlagefläche ermöglicht eine präzise Ausrichtung der Ventilkomponenten und eine optimale Kraftübertragung vom Antriebsträger zur Ventilmembran. Die umgebende Anlagefläche sorgt für eine stabile Befestigung und verhindert Verformungen im Bereich der Membranausnehmung.

In einem weiteren vorteilhaften Beispiel umfasst der Hauptkörper zumindest abschnittsweise ein Außengehäuse, welches die biomimetische Struktur des Hauptkörpers zumindest abschnittsweise umgibt.

Das Außengehäuse bietet zusätzlichen Schutz für die interne biomimetische Struktur und verbessert das äußere Erscheinungsbild des Ventilblockkörpers. Es kann vor äußeren Einflüssen schützen und gleichzeitig die Reinigung erleichtern. Dabei werden die Vorteile der inneren Struktur, wie Materialeinsparung und optimierte Kraftübertragung, beibehalten, während eine geschlossene äußere Hülle für praktische und ästhetische Zwecke geschaffen wird.

In einem weiteren vorteilhaften Beispiel umfasst die biomimetische Struktur ein Netzwerk aus miteinander verbundenen Stegen und Knoten, wobei die Stege stab- oder plattenförmige Elemente sind und die Knoten Verbindungspunkte sind, an denen mindestens zwei, insbesondere drei Stege zusammentreffen.

Diese Netzwerkstruktur bildet das grundlegende Bauprinzip der biomimetischen Struktur. Die Stege als tragende Elemente und die Knoten als Verbindungspunkte bilden zusammen ein belastungsoptimiertes Tragwerk, das von natürlichen Strukturen inspiriert ist. Durch die Forderung, dass an jedem Knoten mindestens zwei, insbesonder mindestens drei Stege zusammentreffen, wird eine stabile räumliche Struktur geschaffen, die Kräfte in verschiedenen Richtungen aufnehmen kann. Diese Netzwerkstruktur ermöglicht eine optimale Balance zwischen Materialeffizienz und mechanischer Stabilität.

Eine Armaturanordnung umfasst einen Ventilblockkörper gemäß einem der vorigen Beispiele und einen Antriebsträger mit einer Mehrzahl von Ventilantrieben, wobei in einem ersten Zustand eine Mehrzahl von sich an dem Antriebsträger abstützenden, beweglichen Spannelementen einer Verspannvorrichtung einen Montageraum zur Anordnung des Ventilblockkörpers an dem Antriebsträger freigeben, und wobei in einem zweiten Zustand die Mehrzahl der Spannelemente über die Befestigungsabschnitte des Ventilblockkörpers eine Spannkraft in den Ventilblockkörper einleiten und den Ventilblockkörper zwischen der Mehrzahl von Spannelementen und dem Antriebsträger verspannen.

Diese Armaturanordnung ermöglicht einen einfachen und schnellen Austausch des Ventilblockkörpers, was besonders im Single-Use-Bereich vorteilhaft ist. Durch den definierten Montageraum im ersten Zustand wird eine einfache Positionierung des Ventilblockkörpers ermöglicht, während im zweiten Zustand durch die Spannelemente eine sichere und präzise Fixierung gewährleistet wird. Die gleichmäßige Einleitung der Spannkräfte über die Befestigungsabschnitte sorgt für eine stabile Verbindung ohne lokale Überbelastungen.

In einem vorteilhaften Beispiel sind die Mehrzahl der Spannelemente über einen relativ zum Ventilblockkörper-Träger bewegbaren Steuer-Träger, an dem die Ventilantriebe starr angeordnet sind, aktuierbar, und wobei der wenigstens eine Spannantrieb seine Antriebskraft in den Steuer-Träger zu dessen Bewegung einleitet.

Diese Konfiguration ermöglicht eine synchronisierte Bewegung aller Spannelemente durch einen einzigen Steuer-Träger, was die Bedienung vereinfacht und die Zuverlässigkeit der Verspannung erhöht. Die starre Anordnung der Ventilantriebe am Steuer-Träger gewährleistet eine präzise Positionierung relativ zum Ventilblockkörper. Durch die Einleitung der Antriebskraft in den Steuer-Träger wird eine gleichmäßige Kraftverteilung auf alle Spannelemente erreicht, was zu einer homogenen Verspannung des Ventilblockkörpers führt.

Ein weiterer Aspekt der Beschreibung betrifft einen Ventilblockkörper. Dieser umfasst einen monolithischen Hauptkörper, wobei der monolithische Hauptkörper eine Mehrzahl von Basisabschnitten mit einem jeweiligen Ventilsitz umfasst, wobei die Ventilsitze über eine jeweilige Sitzöffnung des zugeordneten Basisabschnitts zugänglich sind, wobei der monolithische Hauptkörper wenigstens eine insbesondere eben ausgeführte Anlagefläche zum Anliegen des Ventilblockkörpers an einem Antriebsträger umfasst, wobei der monolithische Hauptkörper eine Mehrzahl von Prozessfluid-Anschlüssen umfasst; und wobei der monolithische Hauptkörper eine Mehrzahl von rohrförmigen Wandungen umfasst, welche jeweils einen sich ausgehend von der jeweiligen Sitzöffnung hin zu zumindest einem der Prozessfluid-Anschlüsse und/oder hin zu zumindest einer anderen der Sitzöffnungen erstreckenden Innenraum eines jeweiligen Prozessfluid-Kanals begrenzen.

Durch die rohrförmigen Wandungen wird im Vergleich zu Vollmaterial-Ventilblöcken Material eingespart, wodurch sich nicht nur Kostenvorteile ergeben, sondern insbesondere im Single-Use-Bereich sich die Umweltbilanz verbessert. Durch die Topologieoptimierung ergeben sich auch Kostenvorteile aufgrund der Materialeinsparung und der entsprechenden Vorteile in der Fertigung.

Ist der Hauptkörper mittels eines additiven Fertigungsverfahrens hergestellt, ergeben sich weitere Vorteile. So können scharfe Kanten im medienberührenden Bereich verhindert werden. Es können so strömungsoptimierte Ventilblockkörper hergestellt werden. Auch Totvolumina können reduziert werden.

Ein vorteilhaftes Beispiel zeichnet sich dadurch aus, dass wenigstens zwei benachbarte rohrförmige Wandungen zumindest abschnittsweise durch einen Hohlraum voneinander beabstandet sind.

Vorteilhaft ist zwischen den rohrförmigen Wandungen für die Prozessfluid-Kanäle kein Material vorhanden, was die Umweltbilanz verbessert.

Ein vorteilhaftes Beispiel zeichnet sich dadurch aus, dass der Ventilblockkörper eine Mehrzahl von Ventilmembranen umfasst, welche eine jeweilige der Sitzöffnungen des monolithischen Hauptkörpers verschließen.

Vorteilhaft werden so eine Reihe von Membranventilen mittels eines Ventilblockkörpers bereitgestellt.

Ein vorteilhaftes Beispiel zeichnet sich dadurch aus, dass wenigstens ein Rohr-Stützabschnitt des monolithischen Hauptkörpers wenigstens zwei benachbarte der rohrförmigen Wandungen miteinander verbindet.

Vorteilhaft verbessert sich dadurch die Stabilität des Ventilblockkörpers.

Ein vorteilhaftes Beispiel zeichnet sich dadurch aus, dass der jeweilige Basisabschnitt die wenigstens eine insbesondere eben ausgeführte Anlagefläche zum Anliegen an dem Antriebsträger bereitstellt, wobei der monolithische Hauptkörper eine Mehrzahl von Befestigungsabschnitten umfasst, welche eine jeweilige von der wenigstens einen Anlagefläche abgewandte Verspannfläche zum Angreifen einer Verspannvorrichtung des Antriebsträgers umfassen.

Vorteilhaft kann damit ein einziger Antriebsträger verwendet werden, der die Antriebe zum Bewegen der Ventilmembrane umfasst.

Ein vorteilhaftes Beispiel zeichnet sich dadurch aus, dass wenigstens zwei benachbarte Befestigungsabschnitte zumindest abschnittsweise durch einen Hohlraum voneinander beabstandet sind.

Die durch den Hohlraum beabstandeten Befestigungsabschnitte ermöglichen Materialeinsparungen.

Ein vorteilhaftes Beispiel zeichnet sich dadurch aus, dass wenigstens ein Rohr-Stützabschnitt des monolithischen Hauptkörpers einen der Befestigungsabschnitte und eine der rohrförmigen Wandungen miteinander verbindet.

Vorteilhaft verbessert sich dadurch die Stabilität des Ventilblockkörpers. Insbesondere weit von den Basisabschnitten abragende rohrförmige Wandungen können so besser gestützt werden.

Ein vorteilhaftes Beispiel zeichnet sich dadurch aus, dass wenigstens ein Spannkraftübertragungsabschnitt des monolithischen Hauptkörpers einen der Befestigungsabschnitte und einen zu dem einen Befestigungsabschnitt benachbarten der Basisabschnitte miteinander verbindet.

Vorteilhaft kann so die in den Befestigungsabschnitt eingeleitete Spannkraft in den Basisabschnitt eingeleitet werden, um den Basisabschnitt über die Anliegefläche an den Antriebsträger zu drücken.

Ein vorteilhaftes Beispiel zeichnet sich dadurch aus, dass der jeweilige Befestigungsabschnitt einen Teil der Anlagefläche bereitstellt.

Vorteilhaft bildet damit der gesamte Befestigungsabschnitt eine monolithische Struktur aus, die die Verspannung des Ventilblockkörpers verbessert.

Ein vorteilhaftes Beispiel zeichnet sich dadurch aus, dass sich wenigstens einer der Befestigungsabschnitte zwischen einem ersten und zweiten der Basisabschnitte befindet, wobei wenigstens ein erster der Spannkraftübertragungsabschnitte den wenigstens einen Befestigungsabschnitt und den ersten Basisabschnitt miteinander verbindet, wobei wenigstens ein zweiter der Spannkraftübertragungsabschnitte den wenigstens einen Befestigungsabschnitt und den zweiten Basisabschnitt miteinander verbindet.

Vorteilhaft wird die in den monolithischen Hauptkörper eingeleitete Spannkraft damit auf wenigstens zwei benachbarte Basisabschnitte übertragen. Damit wird eine gleichmäßige Verspannung des Ventilblockkörpers erreicht.

Ein vorteilhaftes Beispiel zeichnet sich dadurch aus, dass ein jeweiliger der Basisabschnitte des monolithischen Hauptkörpers umfasst: den Ventilsitz; die Sitzöffnung, durch die der Ventilsitz zugänglich ist; eine die Sitzöffnung umgebende Membranausnehmung zur Aufnahme eines lateralen Abschnitts der zugeordneten Ventilmembran; und wenigstens einen Abschnitt der Anlagefläche, welcher die jeweilige Membranausnehmung zumindest abschnittsweise umgibt.

Vorteilhaft kann die Ventilmembran mit ihrem lateralen Bereich in der Ausnehmung aufgenommen werden, um die Sitzöffnung zu verschließen.

Ein vorteilhaftes Beispiel zeichnet sich dadurch aus, dass der Hauptkörper ein Außengehäuse umfasst, welches Hohlräume des Hauptkörpers umgibt.

Neben einem sauberen Erscheinungsbild trägt das Gehäuse dazu bei, dass die Montage und Handhabung des Ventilblockkörpers verbessert werden, aber die Hohlräume im Innern erhalten bleiben. Zudem wird die Stabilität verbessert.

Ein zweiter Aspekt der Beschreibung betrifft eine Armaturanordnung umfassend einen Ventilblockkörper, insbesondere gemäß dem ersten Aspekt. Die Armaturanordnung umfasst zudem einen Antriebsträger mit einer Mehrzahl von Ventilantrieben, wobei in einem ersten Zustand eine Mehrzahl von sich an dem Antriebsträger abstützenden, beweglichen Spannelementen einer Verspannvorrichtung einen Montageraum zur Anordnung des Ventilblockkörpers an dem Antriebsträger freigeben, und wobei in einem zweiten Zustand die Mehrzahl der Spannelemente über die Befestigungsabschnitte des Ventilblockkörpers eine Spannkraft in den Ventilblockkörper einleiten und den Ventilblockkörper zwischen der Mehrzahl von Spannelementen und dem Antriebsträger verspannen.

Ein vorteilhaftes Beispiel zeichnet sich dadurch aus, dass die Mehrzahl der Spannelemente über einen relativ zum Ventilblockkörper-Träger bewegbaren Steuer-Träger, an dem die Ventilantriebe starr angeordnet sind, aktuierbar sind, wobei der wenigstens eine Spannantrieb seine Antriebskraft in den Steuer-Träger zu dessen Bewegung einleitet.

Ein vorteilhaftes Beispiel zeichnet sich dadurch aus, dass die Ventilantriebe starr an dem Ventilblockkörper-Träger angeordnet sind, wobei die Mehrzahl der Spannelemente jeweils über eine zum Ventilblockkörper-Träger feststehenden Spannantrieb bewegbar sind, wobei die Spannelemente beim Übergang in den zweiten Zustand jeweils in eine Ausnehmung des Spannabschnitts einfahren.

In der Zeichnung zeigen:
- Fig. 1: einen Ventilblockkörper in perspektivischer Ansicht;
- Fig. 2: einen Hauptkörper des Ventilblockkörpers aus Fig. 1 in einer Sicht auf Ventilsitze;
- Fig. 3: eine Armaturanordnung umfassend den Ventilblockkörper gemäß Fig. 1 in perspektivischer Ansicht;
- Fig. 4: die Armaturanordnung der Fig. 3 in einer Seitenansicht;
- Fig. 5: den Hauptkörper eines zweiten Beispiels des Ventilblockkörpers in einer Schnittansicht;
- Fig. 6: den Hauptkörper der Fig. 5 in einer Seitenansicht;
- Fig. 7: den Ventilblockkörper gemäß dem zweiten Beispiel in einer perspektivischen Sicht;
- Fig. 8: ein zweites Beispiel der Armaturanordnung mit dem Ventilblockkörper der Fig. 7;
- Fig. 9: den Hauptkörper eines dritten Beispiels des Ventilblockkörpers in einer perspektivischen Ansicht;
- Fig. 10: den Hauptkörper der Fig. 9 in einer Längsschnittansicht;
- Fig. 11: ein weiteres Beispiel des Ventilblockkörpers; und
- Fig. 12: ein weiteres Beispiel der Armaturanordnung mit dem Ventilblockkörper aus Figur 11.

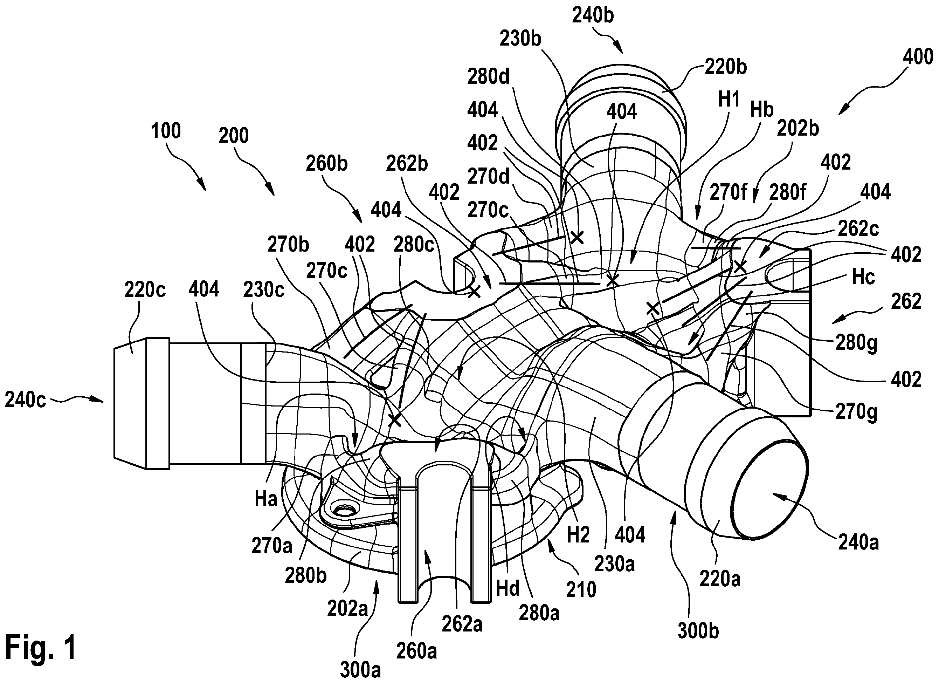

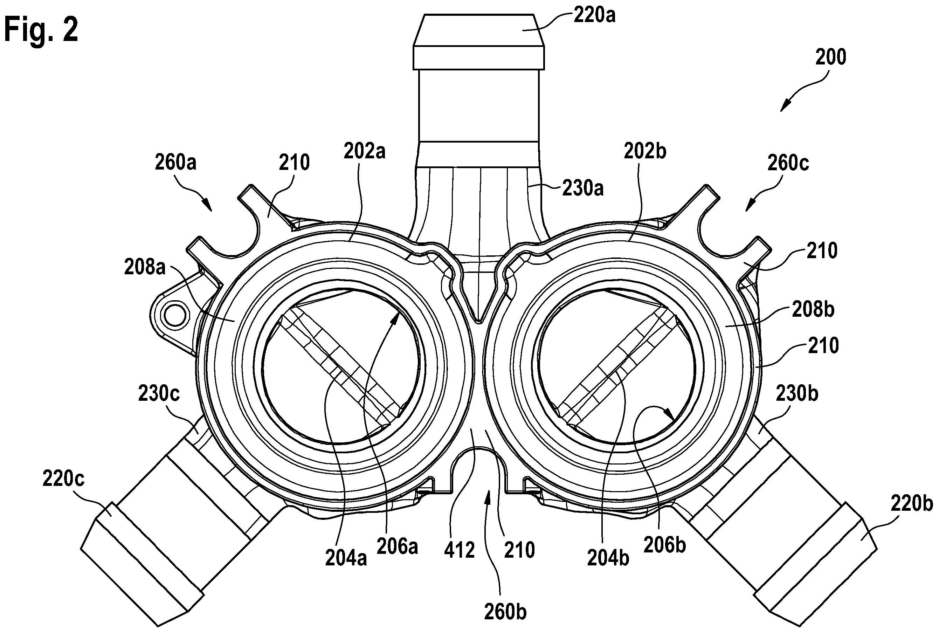

Figur 1 zeigt in perspektivischer Ansicht einen Ventilblockkörper 100 für eine Armaturanordnung der Prozessfluidtechnik. In Figur 2 ist der Hauptkörper 200 mit einer Sicht auf eine Anlagefläche 210 gezeigt.

Der Ventilblockkörper 100 umfasst einen monolithischen Hauptkörper 200. Der Hauptkörper 200 ist aus einem Kunststoff wie beispielsweise Polyamid, Polypropylen, einem thermoplastischen Polyurethan oder einem anderen Kunststoff hergestellt. Beispielsweise kann der Hauptkörper 200 mittels eines additiven Fertigungsverfahren hergestellt werden.

Der Ventilblockkörper 100 ist für eine Single-Use-Anwendung dazu ausgebildet, um nach einer einmaligen Anwendung entsorgt zu werden. Der Ventilblockkörper 100 wird also nach der Beendigung eines sogenannten Batchs, d. h. einem einmaligen oder mehrmaligen Durchlauf eines Prozessfluids einer Charge, entsorgt. Der Ventilblockkörper 100 ist mit seinem monolithischen Hauptkörper 200 deshalb so ausgestaltet, dass er Material nur dort aufweist, wo es für die Aufrechterhaltung der Funktion des Ventilblockkörpers 100 benötigt wird.

Der Hauptkörper 200 weist eine biomimetische Struktur 400 auf. In Bezug auf den in dieser Anmeldung beschriebenen Ventilblockkörper 100 bedeutet "biomimetisch", dass die Struktur von natürlichen, biologischen Strukturen und Prinzipien inspiriert ist und diese nachahmt. Die Natur hat über Millionen von Jahren Evolutionsprozesse durchlaufen und dabei Strukturen entwickelt, die bei minimalem Materialeinsatz maximale Stabilität und Funktionalität bieten. Konkrete Beispiele für biomimetische Strukturen, die bei dem Ventilkörper 100 Anwendung finden:
Knochenstrukturen (trabekuläre Struktur): Knochen bestehen aus einem äußeren dichten Mantel und einem inneren leichten, aber stabilen Gitternetzwerk (Trabekelwerk), das optimal an die auftretenden Belastungen angepasst ist.
Baumaststrukturen: Die Verzweigungen von Bäumen folgen spezifischen Mustern, die eine effiziente Kraftverteilung ermöglichen. Dickere Hauptäste verzweigen sich in immer dünnere Äste, wobei die Verzweigungswinkel und Durchmesser einer biomechanischen Optimierung folgen.
Zelluläre Strukturen in Pflanzen: Pflanzenstängel oder -blätter weisen oft innere Stützstrukturen auf, die bei geringem Materialeinsatz eine hohe Biegesteifigkeit gewährleisten.

Die biomimetische Struktur 400 lässt sich deshalb auch als Gitterstruktur oder Armstruktur bezeichnen.

Im Kontext der Beschreibung bedeutet die biomimetische Gestaltung des Ventilblockkörpers 100, dass die Struktur 400 diese natürlichen Prinzipien nachahmt, indem sie:
Material dort einsetzt, wo es für die strukturelle Integrität benötigt wird, und dort einspart, wo es weniger wichtig ist
Hierarchische Strukturen mit Haupt- und Nebenelementen verwendet
Lastpfade optimiert, indem Strukturelemente entlang der Hauptbelastungsrichtungen ausgerichtet werden
Variable Dichten je nach lokalen mechanischen Anforderungen aufweist
Diese biomimetische Herangehensweise führt zu dem beschriebenen Ventilblockkörper 100, der bei minimiertem Materialeinsatz ausreichend gute mechanische Eigenschaften aufweist, was insbesondere im Single-Use-Bereich durch die Materialeinsparung zu einer verbesserten Umweltbilanz beiträgt. Der monolithische Hauptkörper 200 wird beispielsweise mittels eines additiven Fertigungsverfahren hergestellt.

Eine Mehrzahl von Ventilmembranen 300a-b verschließen eine jeweilige einer Mehrzahl von Sitzöffnungen des monolithischen Hauptkörpers 200. Der Ventilblockkörper 100 umfasst also den Hauptkörper 200 und die Ventilmembrane 300a-b, welche in ihrem lateralen Bereich beispielsweise stoffschlüssig mit dem Hauptkörper 200 verbunden sind. Die Ventilmembrane 300a-b sowie die durch die Ventilmembran 300a-b verschlossenen Sitzöffnungen sind auf einer einzigen Seite des Ventilblockkörpers 100 angeordnet, und zwar auf der Antriebsseite.

Selbstverständlich sind auch Ausführungsformen denkbar, bei denen die Ventilmembrane und damit auch die Ventilantriebe über mehrere, also wenigstens zwei Seiten verteilt an dem Ventilblockkörper angeordnet sind. Beispielsweise können um 45° zueinander gekippte Wände zur Anordnung der Ventilantriebe bzw. Ventilmembranen vorgesehen sein.

Ein jeweiliger Basisabschnitt 202a-b des monolithischen Hauptkörpers 200 umfasst einen Ventilsitz 204 und die Sitzöffnung 206, über welche der Ventilsitz 204 zugänglich ist.

Zudem umfasst der Basisabschnitt 202a-b eine die Sitzöffnung 206a-b umgebende Membranausnehmung 208a-b zur Aufnahme eines lateralen Abschnitts der zugeordneten Ventilmembran 300a-b. Der jeweilige Ventilsitz 204a-b wird über die zugeordnete Sitzöffnung 206a-b des Basisabschnitts 202a-b erreicht. Der Ventilsitz 204a-b ist zwischen zwei Prozessfluid-Kanälen angeordnet, trennt diese also voneinander.

Im gezeigten Beispiel ist der Ventilsitz 204a-b stegartig ausgebildet. In einem nicht gezeigten Beispiel ist wenigstens einer der Ventilsitze kreisringförmig, wobei ein Plug-Diaphragm mit einer rotationssymmetrischen konvexen Dichtkontur auf den zugeordneten kreisringförmigen Ventilsitz drückt, um den Fluidfluss zu unterbrechen.

Der Basisabschnitt 202a-b umfasst wenigstens einen Abschnitt der ebenen Anlagefläche 210. Der wenigstens eine Abschnitt der ebenen Anlagefläche 210 umgibt die jeweilige Membranausnehmung 208 zumindest abschnittsweise. Die Anlagefläche 210 ist in einem Beispiel durchgehend ausgebildet und tangiert alle Basisabschnitte 202-b. In einem anderen nicht gezeigten Beispiel ist die Anlagefläche 210 abschnittsweise unterbrochen.

Der jeweilige Basisabschnitt 202a-b stellt gemeinsam mit der zugeordneten Ventilmembran 300a-b eine Ventileinheit des Ventilblockkörpers 100 dar, mittels derer ein Fluss von Prozessfluid durch den Ventilblockkörper 100 durch Verstellen der Position der jeweiligen Ventilmembran 300a-b in Relation zu dem feststehenden Ventilsitz 204a-b gestellt bzw. geregelt wird.

Die zumindest abschnittsweise eben ausgeführte Anlagefläche 210 ist dazu eingerichtet, damit der Ventilblockkörper 100 an einem zugeordneten Antriebsträger durchgängig anliegen kann. Damit liegt der jeweilige Basisabschnitt 202a-b im Betrieb der Armaturanordnung mit seiner jeweiligen oder durchgängigen Anlagefläche 210 an der übrigen Armaturanordnung an.

Um die Anlagefläche 210 in Richtung des Antriebsträgers mit einer Spannkraft zu beaufschlagen, umfasst der monolithische Hauptkörper 200 eine Mehrzahl von voneinander beabstandeten Befestigungsabschnitten 260a-c. Im Beispiel sind die Befestigungsabschnitte 260a-c jeweils zwischen zweien der Prozessfluid-Anschlüsse 220a-c angeordnet. Die Befestigungsabschnitte 260a-c sind deshalb speziell auch als Spannabschnitte bezeichenbar.

Der jeweilige Befestigungsabschnitt 260a-c umfasst eine von der wenigstens einen Anlagefläche 210 des Hauptkörpers 200 wegweisende Verspannfläche 262a-c. Über die Verspannfläche 262a-c leitet eine sich an dem Antriebsträger abstützende Verspanneinrichtung ihre Spannkraft in den Ventilblockkörper 100 ein. Der Ventilblockkörper 100 leitet die Spannkraft in den Antriebsträger, an dem der Ventilblockkörper 100 mit seiner Anlagefläche 210 anliegt, ein. Damit wird der Ventilblockkörper 100 zwischen der Verspanneinrichtung und dem Antriebsträger verspannt und festgelegt.

Zwischen einem der Befestigungsabschnitte 260a-c und einer Mehrzahl von rohrförmigen Wandungen 230a-c befindet sich zumindest abschnittsweise eine durchgehende Ausnehmung Ha-d, also ein Leerraum.

Eine jeweilige rohrförmige Wandung 230a-c verbindet zumindest abschnittsweise einen der Prozessfluid-Anschlüsse 220a-c mit wenigstens einem Basisabschnitt 202a-b. Die rohrförmige Wandung 230a-c begrenzt mit ihrem Innenraum einen Prozessfluidkanal, welcher wenigstens einen Prozessfluid-Anschluss 220 a-c mit wenigstens einer Sitzöffnung 206a-b verbindet.

Vorliegend ist beispielsweise der Prozessfluid-Anschluss 220a mit den beiden Sitzöffnungen 206a und 206b verbunden. Der Prozessfluid-Anschluss 220b ist mit der Sitzöffnung 206b verbunden. Der Prozessfluid-Anschluss 220c ist mit der Sitzöffnung 206a verbunden.

Selbstverständlich sind je nach Anwendungsfall auch andere fluidführende Verbindungen zwischen Prozessfluid-Anschlüssen 220 untereinander sowie mit Sitzöffnungen 206 denkbar.

Eine jeweilige rohrförmige Wandung 230a-c umfasst zumindest abschnittsweise eine rohrförmige Außenfläche, welche sich entlang einer Mittenlängsachse des zugeordneten Prozessfluidkanals erstreckt. Dabei ist der Verlauf nicht auf geradlinige Erstreckungen beschränkt. Die rohrförmige Wandung 230a c folgt abschnittsweise gebogenen gedachten Linien, entlang derer sich der jeweilige Prozessfluidkanal erstreckt.

Der monolithische Hauptkörper 200 umfasst die Mehrzahl von Prozessfluid-Anschlüssen 220a-c, welche jeweils in einen Innenraum der zugeordneten rohrförmigen Wandung 230a-c führen. Der Innenraum der jeweiligen rohrförmigen Wandung repräsentiert den zugeordneten Prozessfluid-Kanal 240a-c, welcher im Beispiel der Figuren 1 und 2 von dem Prozessfluid-Anschluss 220a-c zu wenigstens einer Sitzöffnung 206a-b führt.

Ein jeweiliger durchgehender Hohlraum H1, ist in wenigstens einem direkten Weg zwischen zwei benachbarten rohrförmigen Wandungen 230a, 230b bzw. 230a, 230c angeordnet.

Zwei benachbarte Befestigungsabschnitte 260a, 260b oder 260b, 260c sind zumindest abschnittsweise durch den durchgehenden Hohlraum H1, H2 voneinander beabstandet.

Ein Spannkraftübertragungsabschnitt 280a, 280b verbindet den Befestigungsabschnitt 260a mit den Basisabschnitt 202a.

In Figur 1 ist beispielhaft gezeigt, dass der Spannkraftübertragungsabschnitt 280a-g jeweils von der Verspannfläche 262a-c ausgehend schräg in Richtung des zugeordneten Basisabschnitts 202a-b abragt.

Der Spannkraftübertragungsabschnitt 280a ragt beispielsweise ausgehend von dem Befestigungsabschnitt 260a in Richtung der Membranausnehmung 208a des zugeordneten Basisabschnitt 202a ab. Damit wird auch der laterale Bereich der jeweiligen Ventilmembran 300a zwischen dem Hauptkörper 200 und dem Antriebsträger sicher verspannt.

Der jeweilige Befestigungsabschnitt 260a-c stellt im Beispiel einen Teil der Anlagefläche 210 bereit. Die Anlagefläche 210 wird im Beispiel von den Befestigungsabschnitten 260a-c und den Bereichen der Basisabschnitte 202a-b, welche die Membranausnehmung 208a-b umgeben, bereitgestellt.

Wenigstens einer der Befestigungsabschnitte 260a-c schließt sich an einen der Basisabschnitte 202a-b unmittelbar an. Vorteilhaft baut der Ventilblockkörper 100 dadurch kleiner und Material wird eingespart. Zum anderen kann die Spannkraft nahe an der Anlagefläche 210 in den Ventilblockkörper 100 eingeleitet werden.

Der Befestigungsabschnitt 260b ist zwischen dem ersten und dem zweiten der Basisabschnitte 202a, 202b angeordnet. Ein erster der Spannkraftübertragungsabschnitte 280c verbindet den wenigstens einen Befestigungsabschnitt 260b und den ersten Basisabschnitt 202a miteinander. Ein zweiter der Spannkraftübertragungsabschnitte 280d verbindet den wenigstens einen Befestigungsabschnitt 260b und den zweiten Basisabschnitt 202b miteinander.

In Figur 1 ist erkennbar, dass der monolithische Hauptkörper 200 des Ventilblockkörpers 100 die biomimetische Struktur 400 aufweist, die sich zwischen den rohrförmigen Wandungen 230a-c und den sichtbaren Hohlräumen H1, H2 erstreckt. Die biomimetische Struktur 400 besteht aus einem dreidimensionalen Netzwerk von miteinander verbundenen Stegen 402 und Knoten 404, wobei die Stege 402 als stab-, platten- oder freiformförmige Elemente ausgebildet sind, die an den Knoten 404 zusammentreffen.

In Figur 1 ist ebenfalls erkennbar, dass die Dichte der Struktur 400 variiert, wobei sie in der Nähe der Basisabschnitte 202a-b und der Befestigungsabschnitte 260a-c eine höhere Dichte aufweist als in den Bereichen zwischen den rohrförmigen Wandungen 230a-c. Die Stege 402 der Struktur 400 sind entlang der Hauptkraftflüsse orientiert, die während des Betriebs auf den Ventilblockkörper 100 einwirken, wodurch eine verbesserte Kraftübertragung zwischen den Befestigungsabschnitten 260a-c und den Basisabschnitten 202a-b gewährleistet wird.

Die Spannkraftübertragungsabschnitte 280a-g sind in die Struktur 400 integriert und bilden hierarchische Stützelemente, die sich von den Befestigungsabschnitten 260a-c zu den Basisabschnitten 202a-b verzweigen, wobei sie ein biomimetisches Verzweigungsmuster aufweisen, das natürlichen Baumaststrukturen nachempfunden ist.

Die topologische Konnektivität der Struktur 400 im Bereich stärker belasteter Bereiche ist wie folgt ausgebildet. An jedem Knoten 404 in Form der Befestigungsabschnitte 260 treffen mindestens drei Stege 402 zusammen, wobei die Anzahl der zusammentreffenden Stege in diesen mechanisch stärker belasteten Bereichen, wie den Übergängen zwischen den Befestigungsabschnitten 260a-c und den Spannkraftübertragungsabschnitten 280a-g, höher ist.

Der Hohlraumanteil der Struktur 400 inklusive der Rohrabschnitte 230, also des gesamten Hauptkörpers, beträgt zwischen 50% und 90% des Gesamtvolumens, was zu einer signifikanten Materialeinsparung führt, während gleichzeitig die strukturelle Integrität des Ventilblockkörpers 100 gewährleistet bleibt.

Die Übergangsstrukturen zwischen der Struktur 400 und den rohrförmigen Wandungen 230 sowie den Basisabschnitten 202a-b ermöglichen eine gleichmäßige Krafteinleitung und -übertragung und vermeiden lokale Spannungsspitzen. Die Übergangsstrukturen bestehen aus den Stegen 402 mit graduell hin zur jeweiligen Wandung 230 zunehmender Dicke, die radial an einen jeweiligen Außenabschnitt der rohrförmigen Wandungen 230 ansetzen.

Im Anschlussbereich zwischen Steg 402 und Wandung 230 finden sich verstärkte Knoten mit größerem Durchmesser, die als primäre Krafteinleitungspunkte dienen. Die Übergänge weisen definierte Verrundungsradien auf, um Kerbwirkungen zu minimieren.

Die Rohr-Stützabschnitte sind als verstärkte Teilbereiche der Struktur 400 ausgebildet und bilden lastpfadoptimierte Verbindungen zwischen den Wandungen 230 und der umgebenden Struktur 400. Die Orientierung der Stege 402 im Übergangsbereich folgt den berechneten Hauptspannungsrichtungen.

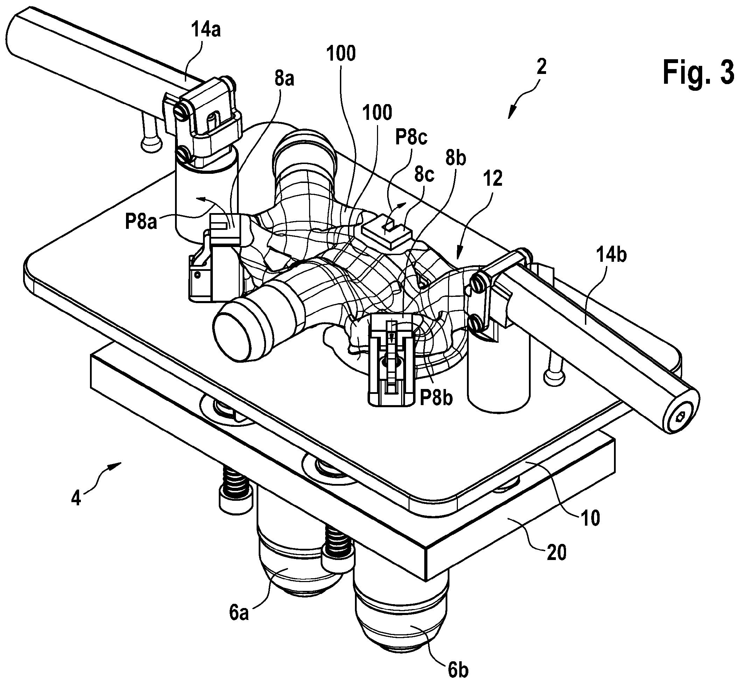

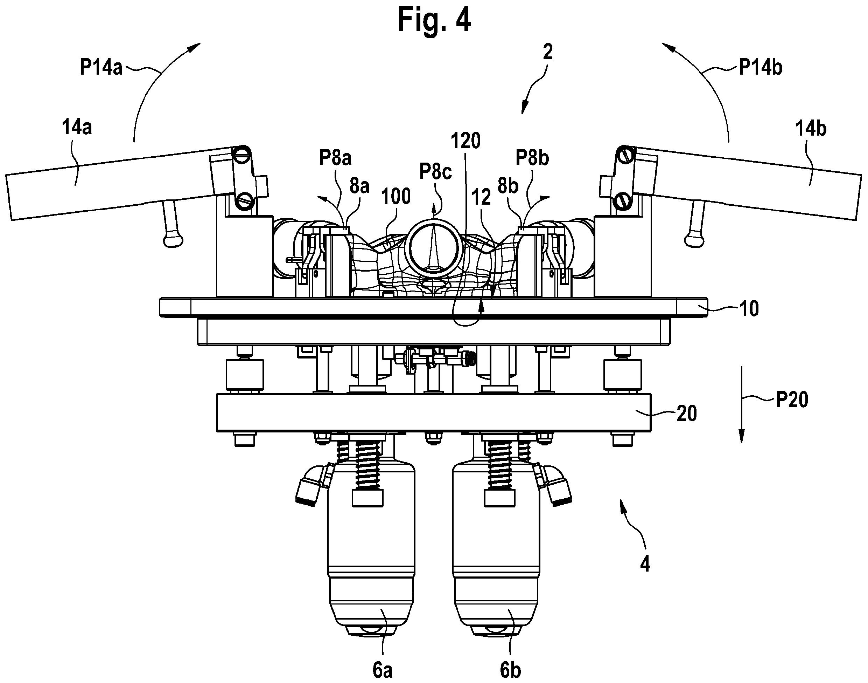

Figuren 3 und 4 zeigen eine Armaturanordnung bzw. Vorrichtung 2 mit dem Ventilblockkörper 100, welcher an dem Antriebsträger 4 angeordnet ist. Im gezeigten Betriebszustand befindet sich der Ventilblockkörper 100 verspannt zwischen der Verspannvorrichtung 8 und dem Antriebsträger 4.

An dem Antriebsträger 4 sind eine Mehrzahl von vorliegend zwei Ventilantrieben 6a-b angeordnet. Die zwei Ventilantriebe 6a-b sind in dem gezeigten Betriebszustand jeweils mit einer der nicht sichtbaren Ventilmembranen kraftführend verbunden. Eine nicht sichtbare Antriebsstange wird durch den zugeordneten Ventilantrieb 6a-b entlang einer jeweiligen Stelleachse bewegt. Die Antriebsstange ist kraftführend mit der Ventilmembran verbunden und bewegt die Ventilmembran zwischen einer geöffneten Stellung, in der das Prozessfluid über den Ventilsitz fließen kann, und einer geschlossenen Stellung, in der der Fluss des Prozessfluids unterbrochen ist.

Die Verspannungsvorrichtung 8 umfasst bewegliche Spannelemente 8a-c. Im gezeigten Betriebszustand drücken die Spannelemente 8a-c den Ventilblockkörper 100 durch das Einleiten einer Spannkraft in denselben auf eine Gegenanlagefläche 12 des Antriebsträgers 4. Der Ventilblockkörper 100 ist zwischen der Mehrzahl von Spannelementen 8a-c und dem Antriebsträger 4 verspannt. Der Ventilblockkörper 100 liegt zumindest in dem Betriebszustand mit seiner wenigstens einen Anlagefläche 210 an einer Gegenanlagefläche 12 eines Ventilblockkörper-Trägers 10 an.

Um den Ventilblockkörper 100 von dem Antriebsträger 4 zu entfernen, findet im Beispiel der Figuren 3 und 4 ein manueller Spannantrieb 14a, 14b Verwendung. In einer nicht gezeigten Form kann die Verspannvorrichtung 8 auch einen pneumatischen oder elektromotorischen Antrieb aufweisen, um die Spannelemente 8a-c zu bewegen.

Der Spannantrieb 14 ermöglicht ein Verspannen des Ventilblockkörpers 100 zwischen Spannelementen und dem zugeordneten Träger 4. Zudem bewegt der Spannantrieb 14 die Ventilantrieb 6a-b zwischen einer mit den zugeordneten Ventilmembranen 300a-b gekoppelten oder koppelbaren Position und einer entkoppelten Position.

Eine Bewegung der Handhaben des Spannantriebs 14a-b gemäß Pfeilen P14a-b führt dazu, dass ein Steuerträger 20, an welchem die Ventilantriebe 6a-b angeordnet sind, sich gemäß einem Pfeil P20 von dem Ventilblockkörper-Träger 10 entfernt. Eine damit einhergehende oder zuvor erfolgte Entkopplung der Antriebsstange von der Ventilmembran wird vorausgesetzt. Zum anderen führt die Aktivierung der Handhaben dazu, dass sich die Spannelemente 8a-c gemäß den Pfeilen P8a-c von dem Ventilblockkörper 100 bzw. den zugeordneten Befestigungsabschnitten entfernen. Anschließend lässt sich der Ventilblockkörper 100 von dem Antriebsträger 4 entfernen und ein Montageraum wird freigegeben. Ein weiterer neuer Ventilblockkörper 100 lässt sich an dem Antriebsträger 4 befestigen, indem er zuvor in den Montageraum eingebracht wird, und anschließend die Verspannvorrichtung 8 zu Verspannung aktuiert bzw. aktiviert wird.

Im Vormontagezustand befindet sich die Mehrzahl von Spannelementen 8a-c in einem von einem Montageraum, in dem der Ventilblockkörper 100 angeordnet werden soll, abgewandten Bereich. Zur Montage und Verspannung werden die Spannelemente 8a-c nach Anordnung des Ventilblockkörpers 100 an diesen herangeführt.

Die Spannvorrichtung 8 stützt sich an dem Träger 10 ab. Eine Untereinheit der Spannvorrichtung 8 umfasst eine entlang ihrer Längsachse beweglich gelagerte Betätigungsstange, welche über ein Drehgelenk mit dem zugeordneten der Mehrzahl von Spannelementen 8a-c verbunden ist, wobei ein zu dem Träger 10 feststehend angeordnetes Element in ein Langloch des zugeordneten Spannelements 8a-c eingreift. Das Langloch verjüngt sich in Richtung eines Kontaktabschnitts des zugeordneten Spannelements 8a-c, der zum Eingriff in den zugeordneten Spannabschnitt des Ventilblockköpers eingerichtet ist.

Es ist vorgesehen, dass ein jeweiliger mit einer entlang der Stellachse beweglichen Ventilstange starr verbundener Adapter der Mehrzahl von Ventilantrieben in dem nicht montierten Zustand den Montageraum zur Anordnung eines zugeordneten Koppelabschnitts einer Membran, freigibt, wobei der jeweilige Adapter zum Erreichen des Betriebszustandes der Armaturanordnung 2 den zugeordneten Koppelabschnitt der Membran zu der Antriebsstange kraftführend festlegt bzw. verriegelt.

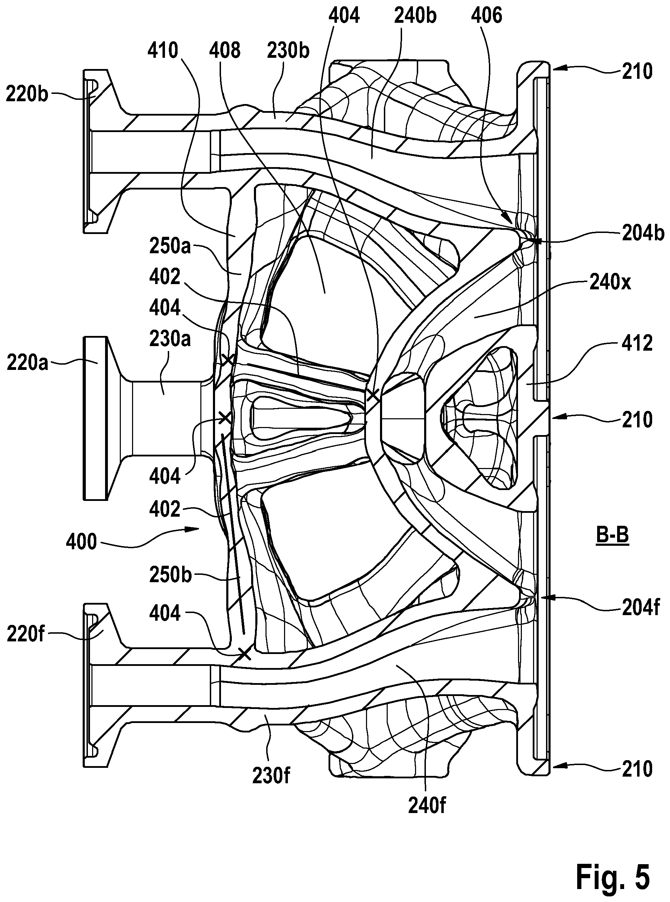

Figuren 5-7 zeigen ein weiteres Beispiel des Ventilblockkörpers 100. In diesen Figuren ist der hier gezeigte Ventilblockkörper 100 dahingehend komplexer ausgebildet, als dass die Anzahl der Ventilmembranen 300, der Prozessfluidanschlüsse 220 und der dazwischenliegenden Elemente des Ventilblockkörper 100 erhöht ist. Entsprechend der im Vergleich zu dem Hauptkörper 200 aus den vorigen Figuren 1-4 anderen Geometrie und Struktur ergibt sich eine teilweise unterschiedliche Ausprägung des Hauptkörpers 200. Für analoge Merkmale des Ventilblockkörpers 100 wird auf die vorige Figurenbeschreibung verwiesen, die auf die nachfolgenden Figuren 5 ff. auch anwendbar ist.

Der monolithische Hauptkörper 200 weist die Mehrzahl von Basisabschnitten 202a-e auf, und zwar mit dem jeweiligen Ventilsitz 204a-e. Der Ventilsitz 204a-e ist über eine jeweilige Sitzöffnung 206a-e des zugeordneten Basisabschnitts 202a-e zugänglich. Der monolithische Hauptkörper 200 umfasst die wenigstens eine insbesondere eben ausgeführte Anlagefläche 210 zum Anliegen des Ventilblockkörpers 100 an dem Antriebsträger. Der monolithische Hauptkörper 200 umfasst die Mehrzahl von Prozessfluid-Anschlüssen 220a-f. Der monolithische Hauptkörper 200 umfasst die Mehrzahl von rohrförmigen Wandungen 230a-f, welche jeweils einen sich ausgehend von der jeweiligen Sitzöffnung 206a-e hin zu zumindest einem der Prozessfluid-Anschlüsse 220a-f und/oder hin zu zumindest einer anderen der Sitzöffnungen 206a-e erstreckenden Innenraum eines jeweiligen Prozessfluid-Kanals begrenzen.

Im Beispiel der Figuren 5-7 gibt es neben den rohrförmigen Wandungen 230a-f, welche zu jeweiligen Prozessfluid-Anschlüssen 220a-f führen, weitere rohrförmige Wandungen, deren Innenraum als Prozessfluid-Kanal ausgebildet ist und welche wenigstens zwei Sitzöffnungen miteinander verbindet.

Ein jeweiliger der Rohr-Stützabschnitte 270a-g ragt von der rohrförmigen Wandung in Richtung des zugeordneten Befestigungsabschnitts 260a-c ab.

Ein erster Rohr-Stützabschnitt 250a-b des monolithischen Hauptkörpers 200 verbindet gemäß Figur 5 wenigstens zwei benachbarte der rohrförmigen Wandungen 230a, 230b; 230a, 230f miteinander. Der Rohr-Stützabschnitt 250a-b ragt von der jeweiligen rohrförmigen Wandung 230a, 230b, 230f ab. Im gezeigten Beispiel bilden die Rohr-Stützabschnitte 250 a-b ein plattenförmiges Gebilde aus, welches voneinander durch einen Hohlraum beabstandete Abschnitte des monolithischen Hauptkörpers 200 starr zueinander festlegt.

Damit bilden die Rohr-Stützabschnitte 250a-b ein plattenförmiges Gebilde aus, welches zumindest abschnittsweise einer gedachten Ebene parallel zur Anlagefläche 210 folgt.

Eine zumindest abschnittsweise durchgängige plattenförmige erste Kontur 410 erstreckt sich parallel und beabstandet zu dem Verlauf der Basisabschnitte 202 zwischen den rohrförmigen Wandungen 230a, 230b, 230f, wobei sich die erste plattenförmige Kontur 410 zwischen den Prozessfluid-Anschlüssen 220a, 230b, 2304 und den Basisabschnitten 202 befindet. Die erste plattenförmige Kontur 410 ist hier Teil der biomimetischen Struktur 400.

Eine zweite plattenförmige Kontur 412 ist als Teil der biomimetischen Struktur 400 ausgebildet und verbindet die Basisabschnitte 202 miteinander. Damit verbessert sich die Verbindungssteifigkeit der Basisabschnitte 202 zueinander.

Der jeweilige Rohr-Stützabschnitt 250a-b ist dazu eingerichtet, wenigstens eine rohrförmige Wandung 230a-f zu stützen, d.h. beispielsweise vor einem ungewollten Verbiegen und Beschädigen zu schützen. Dafür greift der Rohr-Stützabschnitt 250a-b an einem anderen Abschnitt des monolithischen Hauptkörpers 200 an.

Wenigstens ein zweiter Rohr-Stützabschnitt 270a-d des monolithischen Hauptkörpers 200 verbindet einen der Befestigungsabschnitte 260a-c und eine der rohrförmigen Wandungen 230a-c miteinander.

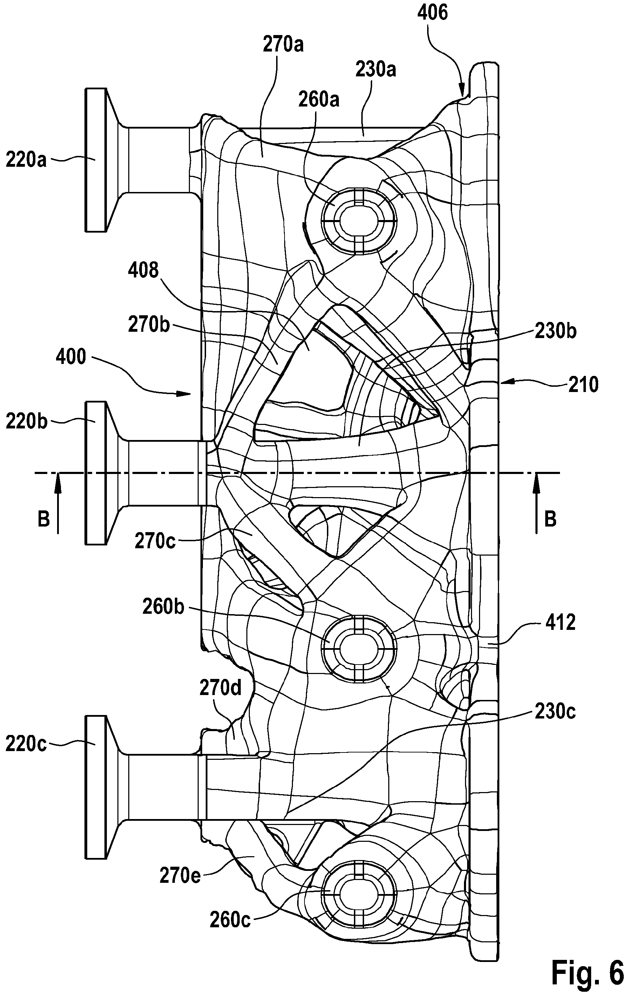

In Figur 6 ist eine Seitenansicht auf den Hauptkörper 200 gezeigt. Es sind Öffnungen der Befestigungsabschnitte 260a-c sichtbar, die in ein jeweiliges Sackloch führen.

Die Befestigungsabschnitte 260a-c sind beispielsweise über die Rohr-Stützabschnitte 270a-e, welche sich teilweise strebenförmig, teilweise als Randbereich einer durchgängigen Platte von dem Befestigungsabschnitt 260a-c weg erstrecken, mit einer jeweiligen einen Prozessfluidkanal bereitstellenden Wandung 230a-c verbunden.

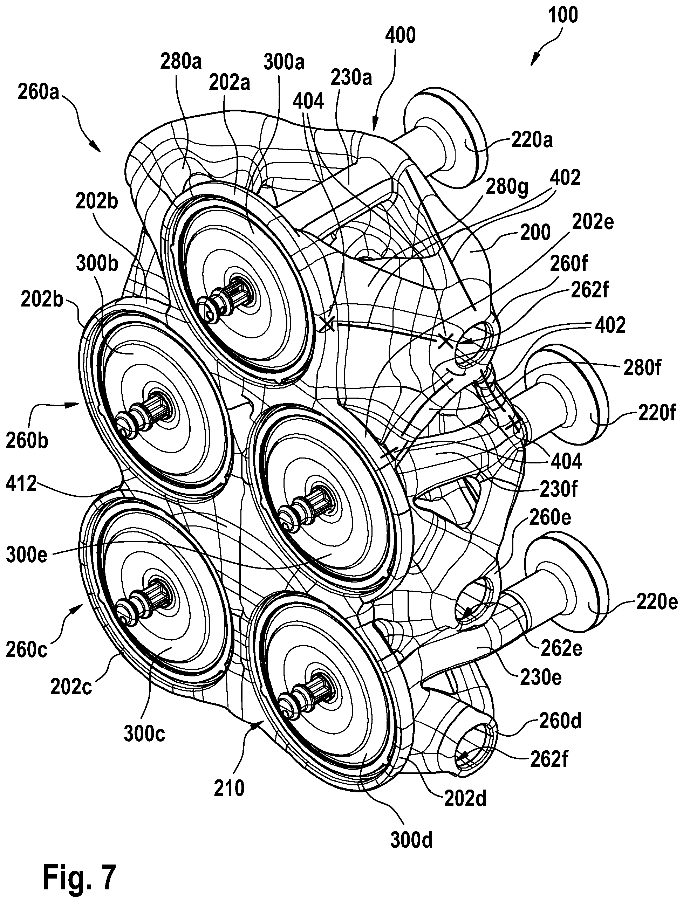

Figur 7 zeigt den Ventilblockkörper 100 der Figuren 4 und 5 in einer perspektivischen Darstellung. Es ist gezeigt, dass der Ventilblockkörper 100 die Mehrzahl von Ventilmembranen 300a-e umfasst, welche eine jeweilige der Sitzöffnungen 206a-e des monolithischen Hauptkörpers 200 verschließen. Die jeweilige Ventilmembran 300a-b; 300a-e ist mit ihrem lateralen Bereich stoffschlüssig mit dem monolithischen Hauptkörper 200 verbunden.

Es ist vorgesehen, dass sich wenigstens einer der Befestigungsabschnitte 260f, welcher zumindest abschnittsweise als von der Anlagefläche 210 wegweisende Fläche ausgebildet ist, zwischen zwei Basisabschnitten 202a, 202e angeordnet ist.

Der Basisabschnitt 202a und der Vorspannabschnitt 260f sind über einen jeweiligen Spannkraftübertragungsabschnitt 280g miteinander verbunden, um die eingeleitete Spannkraft in Richtung des Basisabschnitt 202b abzuleiten. Der Basisabschnitt 202b und der Befestigungsabschnitte 260f sind über einen weiteren
Spannkraftübertragungsabschnitt 280f miteinander verbunden.

Die Spannkraftübertragungsabschnitte 280g und 280f verlaufen streben-artig und/oder begrenzen eine gemeinsame teilweise platten-förmige Struktur.

Figuren 5 bis 7 zeigen eine im Vergleich zur Figur 1 komplexere Ausführung des Ventilblockkörpers 100 mit seiner biomimetischen Struktur 400. Die Beschreibung der Struktur 400 zu Figur 1 ist auf dieses Ausführungsbeispiel ohne weiteres übertragbar. In dieser Darstellung ist die biomimetische Struktur 400 besonders deutlich zwischen den rohrförmigen Wandungen 230a-f und rund um die Befestigungsabschnitte 260a-f und die Basisabschnitte 202a-e zu erkennen.

Die Struktur 400 besteht aus den Stegen 402 und Knoten 404, die ein zusammenhängendes dreidimensionales Netzwerk bilden. Die Stege 402 weisen unterschiedliche Querschnitte auf, wobei sie in Bereichen höherer mechanischer Belastung, insbesondere in der Nähe der Basisabschnitte 202a-e und der Befestigungsabschnitte 260a-f, einen größeren Durchmesser aufweisen als in einem vom Basisabschnitt 202a-e und Befestigungsabschnitt 206a-f abgewandten Bereich.

Die Knoten 404, an denen mehrere Stege 402 zusammentreffen, sind so gestaltet, dass sie eine ausreichende Kraftübertragung zwischen den verbundenen Stegen 402 ermöglichen.

Die geometrische Anordnung der Struktur 400 folgt dem biomimetischen Prinzip, das beispielsweise von trabekulären Knochenstrukturen inspiriert ist, wobei das Grundmuster der Struktur 400 an die lokalen mechanischen Anforderungen angepasst ist. Beispielsweise ist die variable Dichte der Struktur 400, die Bereiche 406 hoher Dichte in der Nähe der Ventilsitze 204a-e und der Befestigungsabschnitte 260a-f aufweist, während in den weniger belasteten Bereichen 408 zwischen den rohrförmigen Wandungen 230a-f Bereiche niedriger Dichte vorgesehen sind.

Die Struktur 400 des Ventilblockkörpers 100 wird beispielsweise durch die Spannkraftübertragungsabschnitte 280f und 280g repräsentiert, die sich von dem Befestigungsabschnitt 260f zu den Basisabschnitten 202a und 202b erstrecken. Diese hierarchische Struktur weist wenigstens ein Hauptstützelement auf, das sich in kleinere Stützstrukturen verzweigen kann, beispielsweise sichtbar in dem Anschlussbereich an den Basisabschnitt 202e, wobei die Verzweigungswinkel und -durchmesser für eine optimale Kraftübertragung optimiert sind.

Die topologische Konnektivität der Struktur 400 variiert über den Ventilblockkörper 100, wobei in mechanisch höher belasteten Bereichen eine höhere Anzahl von Stegen 402 pro Knoten 404 vorgesehen ist.

Der Hohlraumanteil der Struktur 400 variiert ebenfalls, wobei der Volumenanteil des Materials des Ventilblockkörpers 100 zwischen 5% und 70% des Gesamtvolumens des einhüllenden Quaders des Ventilblockkörpers 100 beträgt.

Die mechanische Kontinuität der Struktur 400 wird durch spezielle Übergangsstrukturen zwischen der Struktur 400 und den anderen Elementen des Ventilblockkörpers 100 sichergestellt, wobei diese Übergangsstrukturen besonders gut zwischen den rohrförmigen Wandungen 230a-f und dem Befestigungsabschnitt 260f zu erkennen sind. Um den Befestigungsabschnitt 260f schließen sich die einzelnen Stege 404 mit abgerundeten Außenkonturen an.

Die Lastpfadoptimierung der Struktur 400 ist durch die Ausrichtung der Stege 402 entlang der Hauptbelastungsrichtungen gekennzeichnet, was zu einer anisotropen Struktur führt, die besonders gut in Richtung der Hauptbelastungen optimiert ist, die auf den Ventilblockkörper 100 einwirken, wenn er zwischen der Verspannvorrichtung 8 und dem Antriebsträger 4 verspannt ist. Die Hauptbelastungsrichtungen verlaufen beispielsweise jeweils zwischen einem Basisabschnitt 202 und einem zugeordneten Befestigungsabschnitt 260.

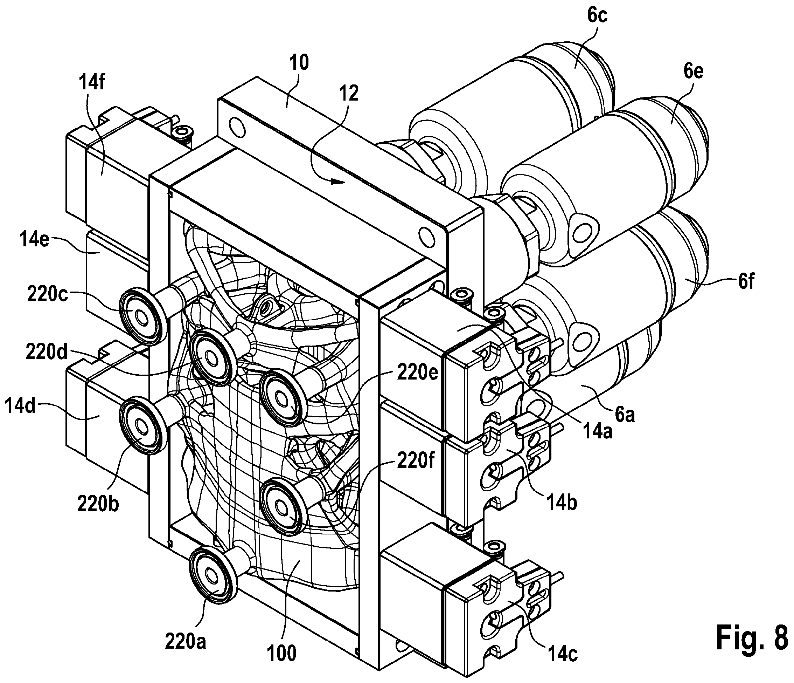

Figur 8 zeigt analog zu den Figuren 3 und 4 die Anordnung des Ventilblockkörpers 100 aus den Figuren 5 bis 7 als Teil der Armaturanordnung 2. Die Ventilantriebe 6a-e sind starr an dem Träger 20 angeordnet, wobei die Mehrzahl der Spannelemente jeweils über eine zum Ventilblockkörper-Träger 10 feststehenden Spannantrieb 14a-f bewegbar sind, und wobei die Spannelemente beim Übergang in den verspannten Zustand, d.h. den Betriebszustand der Armaturanordnung 2, jeweils in eine Ausnehmung des Spannabschnitts 260a-f einfahren.

Im gezeigten Beispiel befindet sich der Ventilblockkörper 100 in dem verspannten Zustand. Um in diesen Zustand zu gelangen, werden die Spannelemente, die beispielsweise als Bolzen ausgebildet sind, in entsprechende Ausnehmungen des Ventilblockkörpers 100 eingefahren. Zuvor geben die Spannelemente den Montageraum zum Einbringen des Ventilblockkörpers 100 frei.

Nach dem Einsetzen des Ventilblockkörpers 100 in den Montageraum wird im Beispiel ein jeweiliger Hebel bzw. eine jeweilige Handhabe des jeweiligen Spannantriebs 14a-f in die in der Figur 8 gezeigte Position verschwenkt. Die Schwenkbewegung des Hebels wird über ein Getriebe in eine Axialbewegung des jeweiligen Spannelements umgesetzt, um über das Spannelement und Spannabschnitt 260a-f den Ventilblockkörper 100 gegen den Ventilblockkörper 100 zu drücken, also zu verspannen.

Von dem Träger 10 ragen Wände ab, welche eine rechteckförmige innere Aufnahmekontur und damit den Aufnahmeraum bzw. Montageraum für den Ventilblockkörper 100 zumindest in einer gedachten Ebene begrenzen.

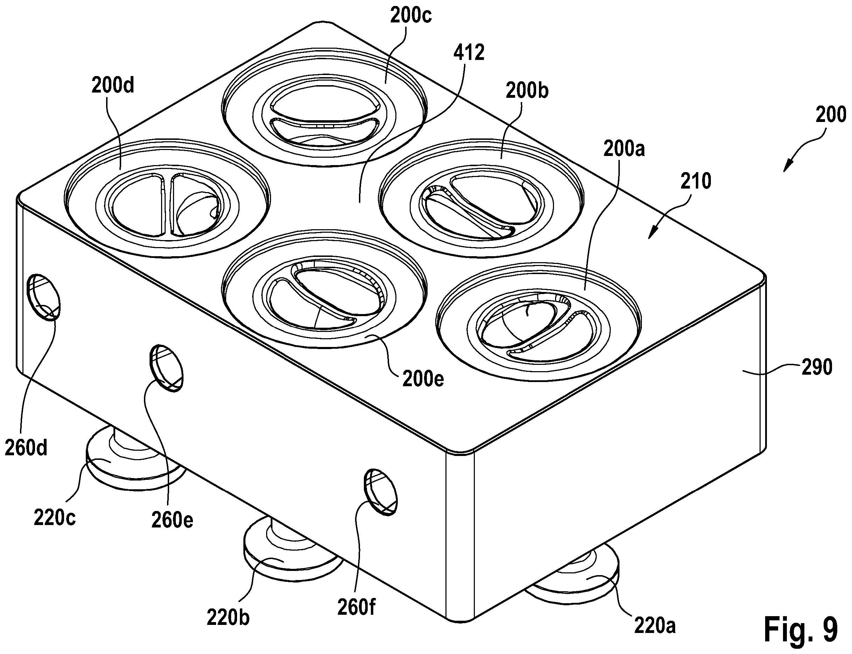

Figur 9 zeigt ein weiteres Beispiel des monolithischen Hauptkörpers 200 für den Ventilblockkörper. Im Unterschied zu den vorigen Figuren umfasst der Hauptkörper 201 ein Außengehäuse 290, welches Hohlräume der übrigen Struktur des Hauptkörpers 201, welche sich innerhalb des Außengehäuses 92 befinden, verbirgt.

In einem nicht gezeigten Beispiel umfasst der monolithische Hauptkörper kein geschlossenes Außengehäuse, sondern lediglich eine Blende, die das Bauteil nach außen hin nur teilweise abschließt. Hintergrund ist, dass die Prozessanlagen mit Spritzwasser von außen gereinigt werden. Die Blende schützt vor Eindringen von Flüssigkeit wie Wasser und trägt zusätzlich zur geschlossenen Gesamtoptik bei.

So verläuft die Blende beispielsweise ausgehend vom einem Bereich, der zur Kontaktierung mit dem Träger 10 vorgesehen ist, bis zu einer Blendenkante, die nicht den Abschluss des Hauptkörpers von dem Träger 10 weggewandt bildet. Insbesondere ist die Blende umlaufend ausgebildet. In diesem Beispiel gibt die Blende für den Monteur die Seite vor, die direkt mit dem Träger 10 verbunden werden soll.

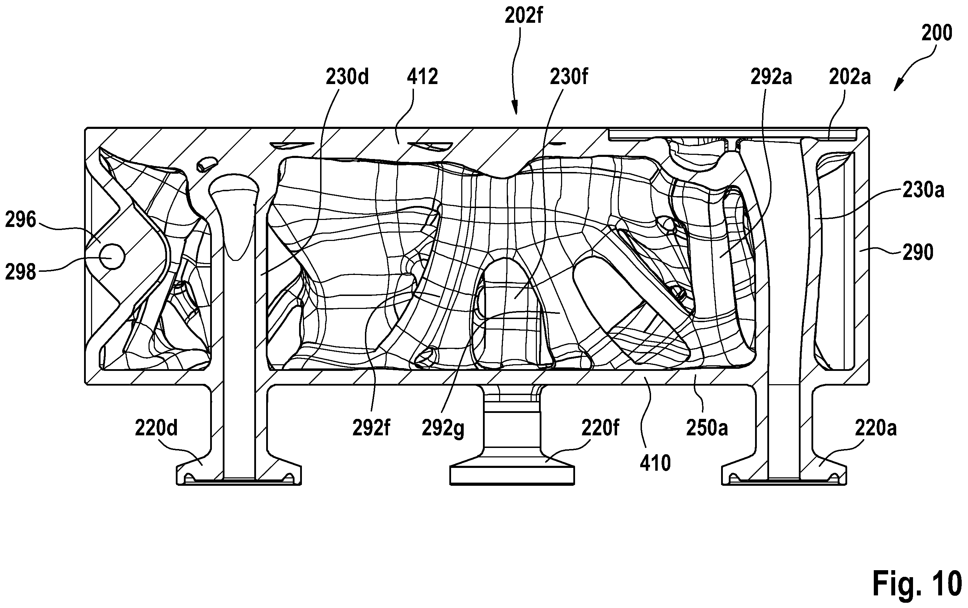

In Figur 10 ist der Hauptkörper 200 in einem Längsschnitt gezeigt. Das Außengehäuse 290 bietet weitere Vorteile bei der Stabilität des Hauptkörpers 200 und schützt den Innenraum des Hauptkörpers 200.

Beispielsweise verbindet eine Strebe 292a einen Rohr-Stützabschnitt 250a, welcher mehrere rohrförmige Wandungen 230a, 230f miteinander verbindet, mit dem Basisabschnitt 202a.

Einem weiteren Beispiel verbinden eine Mehrzahl von separaten Streben 292f und 292g den Rohrstützabschnitt 250a mit einem weiteren Basisabschnitt 202f. Die Streben 292f und 292g verlaufen ausgehend von dem Rohrstützabschnitt 250a zunächst separat zueinander und vereinigen sich im Verlauf in Richtung des Basisabschnitts 202f.

Des Weiteren ist in Figur 10 eine Aufhängung gezeigt, die eine Lasche 296 des Hauptkörpers 200 und eine in der Lasche 296 eingebrachte Durchgangsöffnung 298 umfasst. Das Vorsehen der Aufhängung ist auf alle genannten Ausführungsbeispiels übertragbar.

Zeitlich nach der additiven Fertigung des Hauptkörpers 200 wird dieser mittels der Aufhängung in einer Bedampfungskammer an beispielsweise einem Haken, dessen Ende durch die Durchgangsöffnung 298 geführt wird, aufgehängt. In der Bedampfungskammer wird der Hauptkörper 200 mit Dampf behandelt, um die Prozess- und Funktions-relevanten Oberflächen des Hauptkörpers 200 zu glätten.

Die durchgängige plattenförmige Kontur 410 erstreckt sich parallel zu dem Verlauf der Basisabschnitte 202 zwischen den rohrförmigen Wandungen 230a, 230b, 230f, wobei sich die plattenförmige Kontur 410 zwischen den Prozessfluid-Anschlüssen 220a, 230b, 2304 und den Basisabschnitten 202 befindet. An die plattenförmige Kontur 410 schließt sich die biomimetische Struktur 400 an.

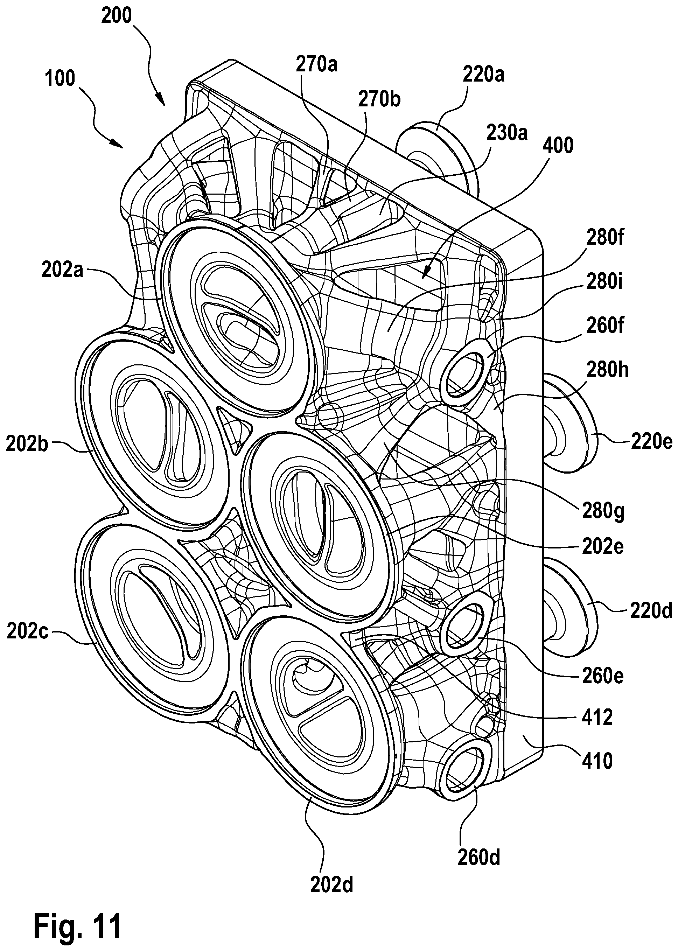

Figur 11 zeigt ein weiteres Beispiel des Ventilkörpers 100 mit einem monolithischen Hauptkörper 200 in perspektivischer Draufsicht auf die die Befestigungsabschnitte 202a-f. Im Unterschied zu Figur 10 bildet die plattenförmige Kontur 410 eine zu den Prozessfluid-Anschlüssen 220a-e abschnittsweise ebene Oberfläche aus, wohingegen sich ausgehend von der plattenförmigen Kontur 410 hin in Richtung der Basisabschnitte 202a-e die biomimetische Struktur 400 mit den weiteren Abschnitten des Hauptkörpers 200 ohne weitere einhausende Struktur erstreckt.

Die biomimetische Struktur 400 verbindet die Basisabschnitte 202a-b; 202a-e, die Befestigungsabschnitte 260a-c; 260a-f und die rohrförmigen Wandungen 230a-c; 230a-f miteinander, indem sich die biomimetische Struktur 400 an der plattenförmigen Kontur 410 abstützt.

Die hierarchische Stützstruktur umfasst Teile der Struktur 400, wobei sich Hauptstützelemente beispielsweise in Form der rohrförmigen Wandung 230a in kleinere Stützstrukturen wie die Rohrstützabschnitte 270a-b, die sich an der plattenförmigen Kontur 410 abstützen, verzweigen. Die Stützstrukturen in Form der Rohrstützabschnitte 270a-b und der rohrförmigen Wandung weisen also das biomimetisches Verzweigungsmuster auf, das einer natürlichen Baumaststruktur nachempfunden ist.

Die biomimetische Struktur 400 stellt das dreidimensionale Netzwerk aus miteinander verbundenen Strukturelementen bereit, welches die rohrförmigen Wandungen 230a-c; 230a-f, die Basisabschnitte 202a-b, die Befestigungsabschnitte 260a-f in verschiedenen Raumrichtungen stabilisiert, wobei die biomimetische Struktur 400 eine Orientierung der Strukturelemente entlang der Hauptkraftflüsse im Betrieb aufweist. Beispielsweise ist der Befestigungsabschnitt 260f mittels stegartigen Spannkraftübertragungsabschnitten 280f und 280g mit den Basisabschnitten 202a und 202e verbunden. Weitere stegartige Spannkraftübertragungsabschnitte 280h und 280i verbinden den Befestigungsabschnitt 260f mit der plattenförmigen Kontur 410, um die in den Befestigungsabschnitt 260f eingeleitete Spannkraft als Zugkraft in die plattenförmige Kontur 410 einzuleiten.

Die Spannkraftübertragungsabschnitte 280 verlaufen sternförmig von den jeweiligen Befestigungsabschnitt 260 weg und folgen damit den gewünschten Hauptkraftrichtungen, die sich beim Einbringen einer Befestigungskraft in den jeweiligen Spannkraftübertragungsabschnitt ausprägen.

Die Spannkraftübertragungsabschnitte 280 sind somit Teil der biomimetischen Struktur 400 und verbinden die Befestigungsabschnitte 260 mit den Basisabschnitten 202 sowohl direkt als auch indirekt über weitere Abschnitt wie die plattenförmige Kontur 410, um die Befestigungskraftübertragung zu ermöglichen.

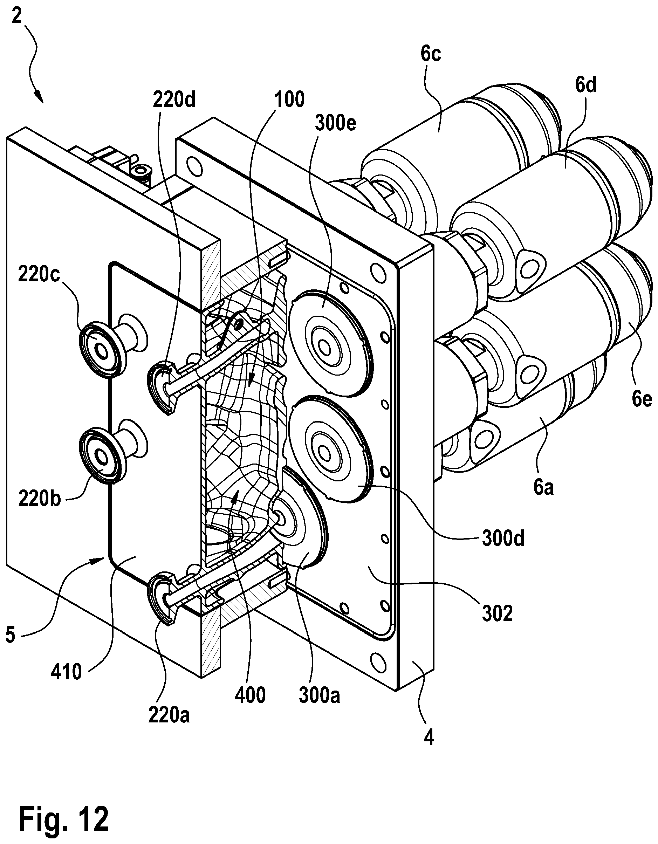

Figur 12 zeigt den Ventilblockkörper 100 aus Figur 11 als Teil der Armaturanordnung 2 in perspektivischer Ansicht. In diesem Beispiel sind die Ventilmembrane 300a-e über einen Membranverbindungsabschnitt 302 verbunden und separat vom Hauptkörper 200 ausgeführt.

Die anschlussseitige Oberfläche der plattenförmige Kontur 410 folgt einer umgebenden Oberfläche 5 des Antriebsträgers 4. Damit wird nicht nur die Abreinigbarkeit verbessert, sondern es ergibt sich für das Bedienpersonal ein optisch und haptisch einheitliches Erscheinungsbild. Dadurch wird auch die Bedienung verbessert, da die Prozessfluid-Anschlüsse durch das Verbergen der biomimetischen Struktur 400 einfacher identifizierbar sind.

## Patentansprüche

1. Ein Ventilblockkörper (100) mit einem monolithischen Hauptkörper (200), wobei der monolithische Hauptkörper (200) umfasst:
eine Mehrzahl von Basisabschnitten (202a-b; 202a-e) mit einem jeweiligen Ventilsitz (204a-b; 204a-e), wobei die Ventilsitze (204a-b; 204a-e) über eine jeweilige Sitzöffnung (206a-b; 206a-e) des zugeordneten Basisabschnitts (202a-b; 202a-e) zugänglich sind;
eine Mehrzahl von Befestigungsabschnitten (260a-c; 260a-f);
eine Mehrzahl von Prozessfluid-Anschlüssen (220a-c; 220a-f);
eine Mehrzahl von rohrförmigen Wandungen (230a-c; 230a-f), welche jeweils einen sich ausgehend von der jeweiligen Sitzöffnung (206a-b; 206a-e) hin zu zumindest einem der Prozessfluid-Anschlüsse (220a-c; 220a-f) und/oder hin zu zumindest einer anderen der Sitzöffnungen (206a-b; 206a-e) erstreckenden Innenraum eines jeweiligen Prozessfluid-Kanals (240a-c; 240a-x) begrenzen; und
eine biomimetische Struktur(400), welche die Basisabschnitte (202a-b; 202a-e), die Befestigungsabschnitte (260a-c; 260a-f) und die rohrförmigen Wandungen (230a-c; 230a-f) miteinander verbindet.

2. Der Ventilkörper (100) gemäß dem Anspruch 1, wobei die biomimetische Struktur (400) eine variable Dichte aufweist, wobei die Dichte der biomimetischen Struktur (400) definiert ist als Verhältnis von Strukturmaterial zu Hohlraum pro Volumeneinheit, wobei die biomimetische Struktur (400) Bereiche mit erhöhter Dichte nahe den Ventilsitzen (204a-b; 204a-e), den Prozessfluid-Anschlüssen (220a-c; 220a-f) und/oder den Befestigungsabschnitten (260a-c; 260a-f) aufweist und Bereiche mit verringerter Dichte zwischen den Ventilsitzen (204a-b; 204a-e), und/oder zwischen den Prozessfluid-Anschlüssen (220a-c; 220a-f) und/oder zwischen den Befestigungsabschnitten (260a-c; 260a-f) aufweist.

3. Der Ventilblockkörper (100) gemäß dem Anspruch 1 oder 2, wobei der monolithische Hauptkörper (200) eine hierarchische Stützstruktur, insbesondere in Form der biomimetischen Struktur (400), umfasst, bei der sich Hauptstützelemente in kleinere Stützstrukturen verzweigen, wobei die Stützstrukturen ein biomimetisches Verzweigungsmuster aufweisen, das einer natürlichen Baumaststruktur nachempfunden ist.

4. Der Ventilblockkörper (100) gemäß einem der vorigen Ansprüche, wobei die biomimetische Struktur (400) ein dreidimensionales Netzwerk aus miteinander verbundenen Strukturelementen bildet, welches die rohrförmigen Wandungen (230a-c; 230a-f) in verschiedenen Raumrichtungen stabilisiert, wobei die biomimetische Struktur (400) eine Orientierung der Strukturelemente entlang der Hauptkraftflüsse im Betrieb aufweist.

5. Der Ventilblockkörper (100) gemäß einem der vorigen Ansprüche, wobei wenigstens zwei benachbarte rohrförmige Wandungen (230a, 230b; 230a, 230c) zumindest abschnittsweise durch einen durchgehenden Hohlraum (H1, H2) voneinander beabstandet sind, sodass sich zwischen den rohrförmigen Wandungen eine skelettartige Struktur der biomimetischen Struktur (400) ergibt.

6. Der Ventilblockkörper (100) gemäß einem der vorigen Ansprüche, wobei die biomimetische Struktur (400) Rohr-Stützabschnitte (270a-g; 270a-d) umfasst, die als Teil der biomimetischen Struktur (400) ausgebildet sind und die rohrförmigen Wandungen (230a-c; 230a-f) mit den Befestigungsabschnitten (260a-c; 260a-f) verbinden.

7. Der Ventilblockkörper (100) gemäß einem der vorigen Ansprüche, wobei die biomimetische Struktur (400) Spannkraftübertragungsabschnitte (280a-g) umfasst, die als Teil der biomimetischen Struktur (400) ausgebildet sind und die Befestigungsabschnitte (260a-c; 260a-f) mit den Basisabschnitten (202a-b; 202a-e) verbinden, um eine Befestigungskraftübertragung, insbesondere eine Spannkraftübertragung, zu ermöglichen.

8. Der Ventilblockkörper (100) gemäß einem der vorigen Ansprüche, wobei der Ventilblockkörper (100) eine Mehrzahl von Ventilmembranen (300a-b; 300a-e) umfasst, welche eine jeweilige der Sitzöffnungen (206a-b; 206a-e) des monolithischen Hauptkörpers (200) verschließen.

9. Der Ventilblockkörper (100) gemäß einem der vorigen Ansprüche, wobei die Rohr-Stützabschnitte (270a-g; 270a-d) und Spannkraftübertragungsabschnitte (280a-g) durch ein Netzwerk aus Stegen (402) und Knoten (404) mit variabler Dichte gebildet werden, wobei die Dichte des Netzwerks im Bereich der Anschlüsse an die Befestigungsabschnitte (260a-c; 260a-f) und im Bereich der Anschlüsse an die Basisabschnitte (202a-b; 202a-e) höher ist als im mittleren Bereich der Rohr-Stützabschnitte (270a-g; 270a-d) und Spannkraftübertragungsabschnitte (280a-g).

10. Der Ventilblockkörper (100) gemäß einem der vorigen Ansprüche, wobei die Rohr-Stützabschnitte (270a-g; 270a-d) und Spannkraftübertragungsabschnitte (280a-g) durch ein Netzwerk aus Stegen (402) und Knoten (404) mit variabler Dichte gebildet werden, wobei die Dichte als Verhältnis von Strukturmaterial zu Hohlraum pro Volumeneinheit und/oder als Anzahl der Stege (402) pro Volumeneinheit definiert ist, wobei die Dichte des Netzwerks im Bereich der Anschlüsse an die Befestigungsabschnitte (260a-c; 260a-f) und im Bereich der Anschlüsse an die Basisabschnitte (202a-b; 202a-e) höher ist als im mittleren Bereich der Rohr-Stützabschnitte (270a-g; 270a-d) und Spannkraftübertragungsabschnitte (280a-g).

11. Der Ventilblockkörper (100) gemäß einem der vorigen Ansprüche, wobei sich eine durchgängige oder abschnittsweise durchgängige plattenförmige Kontur (410) zwischen den rohrförmigen Wandungen (230a-c; 230a-f) erstreckt, wobei sich die plattenförmige Kontur (410) zwischen den Prozessfluid-Anschlüssen (220a-c; 220a-f) und den Basisabschnitten (202a-b; 202a-e) befindet, wobei die plattenförmige Kontur (410) Teil der biomimetischen Struktur (400) ist oder sich die biomimetische Struktur (400) an die plattenförmige Kontur (410) anschließt.

12. Der Ventilblockkörper (100) gemäß einem der vorigen Ansprüche, wobei die Befestigungsabschnitte (260a-c; 260a-f) in einem Raum zwischen den Prozessfluid-Anschlüssen (220a-c; 220a-f) und den Basisabschnitten (202a-b; 202a-e) angeordnet sind.

13. Der Ventilblockkörper (100) gemäß einem der vorigen Ansprüche, wobei ein erstes Verhältnis des Materials zu einem Hohlraum pro Volumeneinheit eines ersten Volumens, begrenzt durch eine Außenhülle der Basisabschnitte (202a-b; 202a-e) und der Befestigungsabschnitte (260a-c; 260a-f), um wenigstens 10%, insbesondere um wenigstens 20%, größer ist als ein zweites Verhältnis des Materials zu einem Hohlraum pro Volumeneinheit eines zweiten Volumens, welches entweder durch die Prozessfluid-Anschlüsse (220a-c; 220a-f) und die Außengrenze der Befestigungsabschnitte (260a-c; 260a-f) begrenzt wird oder durch die plattenförmige Kontur (410) und die Außengrenze der Befestigungsabschnitte (260a-c; 260a-f) begrenzt wird.

14. Der Ventilblockkörper (100) gemäß einem der vorigen Ansprüche, wobei der Basiskörper (200) umfasst:
wenigstens eine Anlagefläche (210) zum Anliegen des Ventilblockkörpers (100) an einem Antriebsträger (4); und
die Mehrzahl von Befestigungsabschnitten (260a-c; 260a-f), welche eine jeweilige von der wenigstens einen Anlagefläche (210) abgewandte Verspannfläche (262a-c; 262a-f) zum Angreifen einer Verspannvorrichtung (8) des Antriebsträgers (4) umfassen wobei der jeweilige Basisabschnitt (202a-b; 202a-e) die wenigstens eine Anlagefläche (210) zum Anliegen an dem Antriebsträger (4) bereitstellt.

15. Der Ventilblockkörper (100) gemäß dem Anspruch 7, wobei wenigstens einer der Spannkraftübertragungsabschnitte (280a-g) des monolithischen Hauptkörpers (200) einen der Befestigungsabschnitte (260a-c; 260a-f) und einen zu dem einen Befestigungsabschnitt (260a-c; 260a-f) benachbarten der Basisabschnitte (202a-b; 202a-e) miteinander verbindet, wobei der jeweilige Basisabschnitt (202a-b; 202a-e) die wenigstens eine Anlagefläche (210) zum Anliegen an dem Antriebsträger (4) bereitstellt.

16. Der Ventilblockkörper (100) gemäß dem Anspruch 7 oder 15, wobei sich wenigstens einer der Befestigungsabschnitte (260b; 260f) zwischen einem ersten und zweiten der Basisabschnitte (202a, 202b; 202a, 202f) befindet, wobei wenigstens ein erster der Spannkraftübertragungsabschnitte (280g) den wenigstens einen Befestigungsabschnitt (260f) und den ersten Basisabschnitt (202a, 202b) miteinander verbindet, und wobei wenigstens ein zweiter der Spannkraftübertragungsabschnitte (280f) den wenigstens einen Befestigungsabschnitt (260f) und den zweiten Basisabschnitt (202a, 202f) miteinander verbindet.

17. Der Ventilblockkörper (100) gemäß einem der vorigen Ansprüche, wobei ein jeweiliger der Basisabschnitte (202a-b; 202a-e) des monolithischen Hauptkörpers (200) umfasst:
den Ventilsitz (204);
die Sitzöffnung (206), durch die der Ventilsitz (204) zugänglich ist;
eine die Sitzöffnung (206) umgebende Membranausnehmung (208) zur Aufnahme eines lateralen Abschnitts der zugeordneten Ventilmembran (300); und
wenigstens einen Abschnitt der Anlagefläche (210), welcher die jeweilige Membranausnehmung (208) zumindest abschnittsweise umgibt.

18. Der Ventilblockkörper (100) gemäß einem der vorigen Ansprüche, wobei der Hauptkörper (200) zumindest abschnittsweise ein Außengehäuse (290) umfasst, die biomimetische Struktur (400) des Hauptkörpers (200) zumindest abschnittsweise umgibt.

19. Der Ventilblockkörper (100) gemäß einem der vorigen Ansprüche, wobei die biomimetische Struktur (400) ein Netzwerk aus miteinander verbundenen Stegen (402) und Knoten (404) umfasst, wobei die Stege (402) stab- oder plattenförmige Elemente sind und die Knoten (404) Verbindungspunkte sind, an denen mindestens zwei, insbesondere mindestens drei Stege (402) zusammentreffen.

20. Der Ventilblockkörper (100) gemäß einem der vorigen Ansprüche, wobei der Hauptkörper (200) eine Aufhängung umfasst, welche eine Lasche (296) des Hauptkörpers (200) und eine in der Lasche 296 eingebrachte Durchgangsöffnung 298 umfasst.

21. Eine Armaturanordnung (2) umfassend:
einen Ventilblockkörper (100) gemäß einem der vorigen Ansprüche; und
einen Antriebsträger (4) mit einer Mehrzahl von Ventilantrieben (6a-b; 6a-e), wobei in einem ersten Zustand eine Mehrzahl von sich an dem Antriebsträger (4) abstützenden, beweglichen Spannelementen (8a-c; 8a-e) einer Verspannvorrichtung (8) einen Montageraum zur Anordnung des Ventilblockkörpers (100) an dem Antriebsträger (4) freigeben, und wobei in einem zweiten Zustand die Mehrzahl der Spannelemente (8a-e) über die Befestigungsabschnitte (260a-c; 260a-e) des Ventilblockkörper (100) eine Spannkraft in den Ventilblockkörper (100) einleiten und den Ventilblockkörper (100) zwischen der Mehrzahl von Spannelementen (8a-e) und dem Antriebsträger (4) verspannen.

22. Die Armaturanordnung (2) gemäß dem Anspruch 21, wobei die Mehrzahl der Spannelemente (8a-e) über einen relativ zum Ventilblockkörper-Träger (10) bewegbaren Steuer-Träger (20), an dem die Ventilantriebe (6a-e) starr angeordnet sind, aktuierbar sind, und wobei der wenigstens eine Spannantrieb (14a-b) seine Antriebskraft in den Steuer-Träger (20) zu dessen Bewegung einleitet.
